# EUROPEAN PATENT SPECIFICATION

(11) **EP 2 466 445 B1**
(45) Date of publication and mention of the grant of the patent: **20.03.2019**
(21) Application number: 11194066.4
(22) Date of filing: 16.12.2011
(51) Int. Cl.: G06F 3/048

(54) **Input direction determination terminal, method and computer program product**
Endgerät, Verfahren und Computerprogrammprodukt zur Bestimmung einer Eingaberichtung
Terminal, procédé et produit programme d'ordinateur pour détermination de la direction d'entrée

(30) Priority: 20.12.2010 JP 2010283469
(43) Date of publication of application: 20.06.2012
(73) Proprietor: BANDAI NAMCO Entertainment Inc., Minato-ku Tokyo 108-0014 (JP)
(72) Inventor: Iljima, Kenta, Tokyo 135-0034 (JP); Fujiwara, Hideyuki, Tokyo 135-0034 (JP); Shimono, Masataka, Tokyo 135-0034 (JP)
(74) Representative: Haseltine Lake LLP

(56) References cited:
- EP-A1- 2 166 442
- US-A- 6 094 197
- US-A1- 2006 267 955
- US-A1- 2007 075 985
- US-A1- 2009 073 136
- US-A1- 2009 262 090

## Description

### BACKGROUND OF THE INVENTION

The present invention relates to a terminal, an input determination method, and a computer program product.

A terminal (portable game device) that is provided with a touch detection area (touch panel) that allows the player to perform a touch operation input on a display screen has been known. A game that utilizes such a touch operation input has been very popular since the player can perform an intuitive operation input.

Such a terminal may be configured so that an object is moved based on a touch operation. For example, an object may be moved based on the moving amount of a touch position detected within a touch detection area (touch panel) of a display screen (see paragraphs 0173 to 0177 of JP-A-2009-153681).

However, it may be difficult for the player to perform an intuitive direction input operation using a related-art terminal. Moreover, the input direction may not be determined correctly.

US2009/0262090 A1 discloses an input device including i) a base comprising an input region, ii) at least one sensor provided at the input region and configured to sense a contact with the input region or a contact movement to the input region and iii) a controller configured to extract data corresponding to each input operation from a memory and receive the extracted data, according to the position of a contact point or the movement direction of the contact point sensed by the sensor relative to a reference position indicating section provided at the input region.

US2009/0073136 A1 discloses a technique for selecting and inputting a command that corresponds to a sequence of relative coordinate values generated by detecting changes in directional movement of a touch position. The user initiates a touch, and as the user moves, the commands corresponding to the sequence of relative coordinate values are displayed. Once the user terminates the touch, the last displayed command is effectively selected and processed as input.

### SUMMARY

The invention can provide a terminal, an input determination method, and a computer program product that make it possible for a player to perform an intuitive direction input operation, and easily determine an input direction.

According to a first aspect of the invention, there is provided a terminal accoording to claim 1.

According to a second aspect of the invention, there is provided an input determination method according to claim 8.

According to a third aspect of the invention, there is provided a computer program product according to claim 13.

Preferred embodiments are defined by the dependent claims.

### BRIEF DESCRIPTION OF THE SEVERAL VIEWS OF THE DRAWING

FIG 1 illustrates an example of a functional block diagram of a terminal.
FIGS. 2A and 2B illustrate an example of a terminal.
FIG 3 illustrates an example of an input operation performed using a terminal.
FIG 4 illustrates an example of a display screen of a terminal.
FIG.5 is a diagram illustrating a direction determination area.
FIGS. 6A and 6B are diagrams illustrating an input direction determination process.
FIG. 7 is a diagram illustrating the relationship between a direction determination area and an input direction.
FIGS. 8A to 8C are diagrams illustrating an input direction determination process.
FIGS. 9A to 9C are diagrams illustrating an input direction determination process.
FIGS. 10A to 10C are diagrams illustrating an input direction determination process.
FIGS. 11A to 11C are diagrams illustrating an input direction determination process.
FIGS. 12A and 12B are diagrams illustrating a display control process that displays an input direction image.
FIGS. 13A and 13B are diagrams illustrating a display control process that displays an input direction image.
FIG. 14 is a flowchart according to one embodiment of the disclosure.
FIG. 15 is a diagram illustrating an input direction determination process according to one embodiment when two determination areas are provided.
FIGS. 16A to 16C are diagrams illustrating a movement control process.
FIGS. 17A to 17C are diagrams illustrating a movement control process.
FIG. 18 is a diagram illustrating a direction determination area.

### DETAILED DESCRIPTION

(1) One embodiment of the disclosure relates to a terminal that determines an input direction based on an indicated position, the terminal comprising:
   an acquisition section that acquires an indicated position that has been input using an input section;
   an area setting section that determines a reference position based on the previous indicated position, and sets a plurality of direction determination areas based on the reference position, the plurality of direction determination areas respectively corresponding to a plurality of directions; and
   an input direction determination section that determines the input direction within a period in which the indicated position is input using the input section based on a direction determination area among the plurality of direction determination areas to which the indicated position belongs,
   the area setting section causing the reference position to follow a change in the indicated position
   characterised in that the acquisition section acquires the indicated position that has been input using the input section in a given cycle when the indicated position has been continuously detected,
   the area setting section sets the plurality of direction determination areas that respectively correspond to the plurality of directions based on the reference position acquired at an (N-1)th timing in the given cycle, and
   the input direction determination section determines the input direction based on a direction determination area among the plurality of direction determination areas to which the indicated position acquired at an Nth timing in the given cycle belongs.

Another embodiment of the disclosure relates to a program product that implements a process that determines an input direction based on an indicated position, the program product causing a computer to function as:
an acquisition section that acquires an indicated position that has been input using an input section;
an area setting section that determines a reference position based on the previous indicated position, and sets a plurality of direction determination areas based on the reference position, the plurality of direction determination areas respectively corresponding to a plurality of directions; and
an input direction determination section that determines the input direction within a period in which the indicated position is input using the input section based on a direction determination area among the plurality of direction determination areas to which the indicated position belongs,
the area setting section causing the reference position to follow a change in the indicated position
characterised in that the acquisition section acquires the indicated position that has been input using the input section in a given cycle when the indicated position has been continuously detected,
the area setting section sets the plurality of direction determination areas that respectively correspond to the plurality of directions based on the reference position acquired at an (N-1)th timing in the given cycle, and
the input direction determination section determines the input direction based on a direction determination area among the plurality of direction determination areas to which the indicated position acquired at an Nth timing in the given cycle belongs.

Another embodiment of the disclosure relates to an input determination method that is implemented by a terminal that determines an input direction based on an indicated position, the input determination method including:
an acquisition step that acquires an indicated position that has been input using an input section;
an area setting step that determines a reference position based on the previous indicated position, and sets a plurality of direction determination areas based on the reference position, the plurality of direction determination areas respectively corresponding to a plurality of directions; and
an input direction determination step that determines the input direction within a period in which the indicated position is input using the input section based on a direction determination area among the plurality of direction determination areas to which the indicated position belongs,
the area setting step causing the reference position to follow a change in the indicated position
characterised in that the acquisition step acquires the indicated position that has been input using the input section in a given cycle when the indicated position has been continuously detected,
the area setting step sets the plurality of direction determination areas that respectively correspond to the plurality of directions based on the reference position acquired at an (N-1)th timing in the given cycle, and
the input direction determination step determines the input direction based on a direction determination area among the plurality of direction determination areas to which the indicated position acquired at an Nth timing in the given cycle belongs.

Since the plurality of direction determination areas that respectively correspond to the plurality of directions are caused to follow a change in the indicated position, the input direction can be easily determined. Therefore, the input direction input by the player can be instantaneously and correctly determined. This makes it possible for the player to perform an intuitive direction input operation.

According to the above configuration, since the plurality of direction determination areas that respectively correspond to the plurality of directions are set based on the indicated position acquired at an (N-1)th timing, and the input direction is determined based on the direction determination area to which the indicated position acquired at an Nth timing belongs, the input direction determination accuracy can be improved.
(3) In each of the program product and the terminal,
the area setting section may set the plurality of direction determination areas that respectively correspond to the plurality of directions around the indicated position acquired at the (N-1)th timing.

In the input determination method,
the area setting step may set the plurality of direction determination areas that respectively correspond to the plurality of directions around the indicated position acquired at the (N-1)th timing.

According to the above configuration, since the plurality of direction determination areas that respectively correspond to the plurality of directions are set around the indicated position acquired at the (N-1)th timing, the input direction determination accuracy can be improved.
(4) In each of the program product and the terminal,
the area setting section may set the plurality of direction determination areas that respectively correspond to the plurality of directions around a position that is located at a given distance from the indicated position acquired at the (N-1)th timing.

In the input determination method,
the area setting step may set the plurality of direction determination areas that respectively correspond to the plurality of directions around a position that is located at a given distance from the indicated position acquired at the (N-1)th timing.

According to the above configuration, since the plurality of direction determination areas that respectively correspond to the plurality of directions are set around a position that is located at a given distance from the indicated position acquired at the (N-1)th timing, the player can easily perform an input operation.
(5) In each of the program product and the terminal,
the area setting section may set the plurality of direction determination areas that respectively correspond to the plurality of directions around a position that is located at a given distance from the previous indicated position.

In the input determination method,
the area setting step may set the plurality of direction determination areas that respectively correspond to the plurality of directions around a position that is located at a given distance from the previous indicated position.
(6) In each of the program product and the terminal,
the acquisition section may acquire a touch position as the indicated position, the touch position being a position at which a touch detection area provided within a display screen has been touched,
the area setting section may cause the plurality of direction determination areas that respectively correspond to the plurality of directions to follow a change in the touch position, and
the input direction determination section may determine the input direction based on a direction determination area among the plurality of direction determination areas to which the touch position belongs.

In the input determination method,
the acquisition step may acquire a touch position as the indicated position, the touch position being a position at which a touch detection area provided within a display screen has been touched,
the area setting step may cause the plurality of direction determination areas that respectively correspond to the plurality of directions to follow a change in the touch position, and
the input direction determination step may determine the input direction based on a direction determination area among the plurality of direction determination areas to which the touch position belongs.

The touch detection area may be a touch panel or the like. The touch position may be a touch position detected by a touch panel, for example. According to the above configuration, the input direction determination accuracy can be improved even when the player performs an input operation by touching the touch detection area. Moreover, the player can perform an intuitive direction input operation.
(7) The program product may cause the computer to further function as: a display control section that displays an input direction image that indicates the input direction so that the input direction image follows a change in the indicated position.

The terminal may further include a display control section that displays an input direction image that indicates the input direction so that the input direction image follows a change in the indicated position.

The input determination method may further include a display control step that displays an input direction image that indicates the input direction so that the input direction image follows a change in the indicated position.

According to the above configuration, since the input direction image that indicates the input direction is displayed so that the input direction image follows a change in the indicated position, the player can instantaneously determine the input direction.
(8) The program product may cause the computer to further function as: a movement processing section that moves an object in an object space based on the input direction that has been determined by the input direction determination section.

The terminal may further include a movement processing section that moves an object in an object space based on the input direction that has been determined by the input direction determination section.

The input determination method may further include a movement processing step that moves an object in an object space based on the input direction that has been determined by the input direction determination step.

According to the above configuration, since the object is moved based on the input direction that has been determined by the input direction determination section (step), the player can intuitively instruct the moving direction of the object.

Exemplary embodiments of the disclosure are described below. Note that the following embodiments do not unduly limit the scope of the invention as stated in the claims. Note also that all of the elements described below should not necessarily be taken as essential elements of the invention.

Note also that in the following the phrase "according to one embodiment of the invention" is to be interpreted merely as "embodiment of the disclosure", since the scope of the invention is exclusively defined by the appended claims.

### 1. Configuration

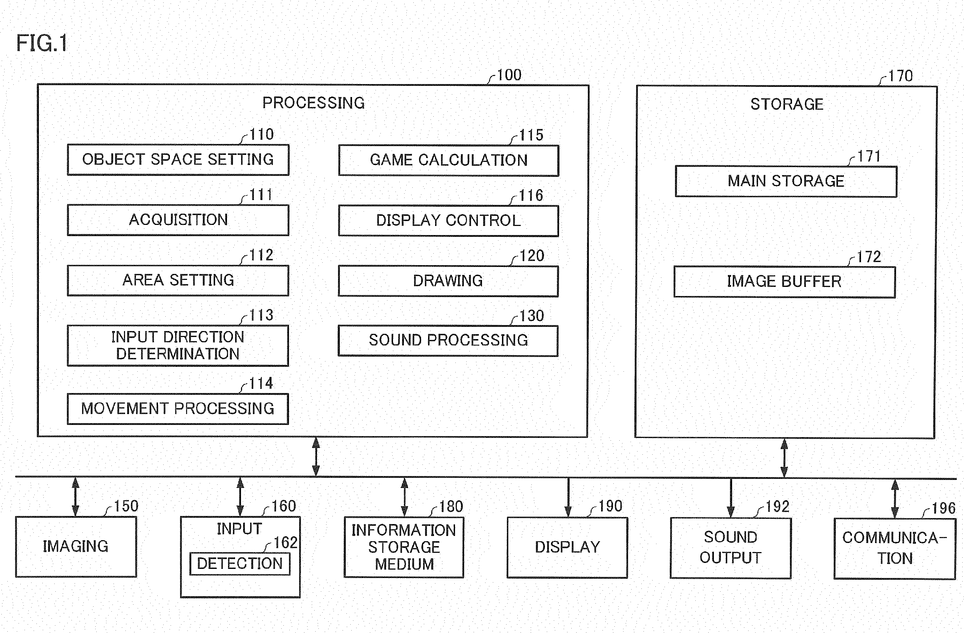

The configuration of a terminal 10 according to one embodiment of the invention is described below with reference to FIG. 1. The terminal 10 is a mobile phone, a smartphone, a portable terminal, a game device, a portable game device, an image generation device, or the like. FIG. 1 illustrates an example of a functional block diagram of the terminal 10 according to one embodiment of the invention. Note that the terminal according to one embodiment of the invention may have a configuration in which some of the elements (sections) illustrated in FIG. 1 are omitted.

An operation section 160 allows the player to input operation data. The function of the operation section 160 may be implemented by a touch panel, a touch panel display, a mouse, a trackball, or the like. The input section 160 includes a detection section 162 that detects the two-dimensional coordinates (x, y) of an indicated position. For example, the detection section 162 detects the two-dimensional coordinates (x, y) of a touch (contact) position within a touch (contact) detection area (touch panel).

The term "touch position" (i.e., touch position coordinates or indicated position) used herein refers to position information obtained from the touch detection area when the player has performed a touch operation. When a plurality of touch positions have 12 been (e.g., simultaneously) detected within the touch detection area, one of the plurality of touch positions (e.g., the touch position that was detected earlier than the remainder) may be used. When a plurality of determination areas are present within the touch detection area, one touch position (e.g., the touch position that was detected earlier than the remainder) may be used corresponding to each determination area. Note that the term "determination area" used herein refers to a range within the touch detection area that specifies an acquired touch position that is used for a process (e.g., movement control process) performed by a processing section 100.

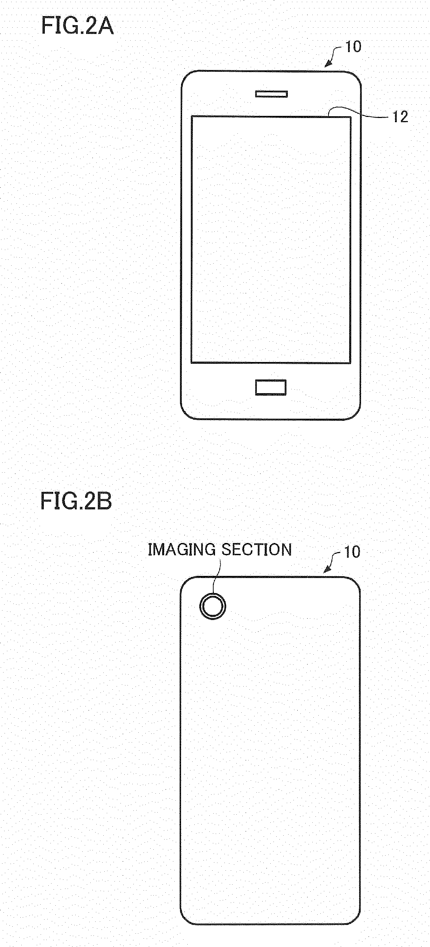

A display screen (display) 12 illustrated in FIGS. 2A and 2B is a touch panel display in which a liquid crystal display and a touch panel for detecting a position touched by the player (operator or user) are stacked. Therefore, the display screen 12 functions as the input section 160 and a display section 190. The player may perform a touch operation on the display screen 12 using a fingertip or an input device such as a touch pen. The input section 160 may be configured so that the player changes the operation direction (rotation direction) of an operating means (ball) of an operation section.

The input section 160 may include a button, a lever, a keyboard, a steering wheel, a microphone, an acceleration sensor, or the like that allows the player to input operation information (operation signal) other than the indicated position.

A storage section 170 serves as a work area for the processing section 100, a communication section 196, and the like. The function of the storage section 170 may be implemented by a RAM (VRAM) or the like. The storage section 170 includes a main storage section 171 that is used as a work area, and an image buffer 172 that stores a final display image and the like. Note that the storage section 170 may have a configuration in which the main storage section 171 and/or the image buffer 172 is omitted.

A touch position acquired by an acquisition section 111, a determination area, a direction determination area, and the like may be stored in the main storage section 171.

An information storage medium 180 (computer-readable medium) stores a program, data, and the like. The function of the information storage medium 180 may be implemented by an optical disk (CD or DVD), a magneto-optical disk (MO), a magnetic disk, a hard disk, a magnetic tape, a memory (ROM), or the like. The processing section 100 performs various processes according to one embodiment of the invention based on a program (data) stored in the information storage medium 180. A program that causes a computer to function as each section according to one embodiment of the invention (i.e., a program that causes a computer to execute the process performed by each section) may be stored in the information storage medium 180.

The display section 190 outputs an image generated according to one embodiment of the invention. The function of the display section 190 may be implemented by a CRT, an LCD, a touch panel display, a head-mounted display (HMD), or the like. The display 12 that functions as the display section 190 and utilizes a touch panel display also functions as the input section 160 that allows the player to perform a game operation. A resistive film (four-wire type or five-wire type) touch panel, an electrostatic capacitive touch panel, an electromagnetic induction touch panel, an ultrasonic surface acoustic wave touch panel, an infrared scan touch panel, or the like may be used as the touch panel.

A sound output section 192 outputs sound generated according to one embodiment of the invention. The function of the sound output section 192 may be implemented by a speaker, a headphone, or the like.

The communication section 196 performs a control process for communicating with the outside (e.g., host device or another terminal). The function of the communication section 196 may be implemented by hardware such as a processor or a communication ASIC, a program, or the like.

Note that the terminal 10 may receive a program (data) that causes a computer to function as each section according to one embodiment of the invention from an information storage medium or a storage section included in a server via a network, and may store the received program (data) in the information storage medium 180 or the storage section 170. A case where the terminal 10 operates based on a program (data) received from a server is also included within the scope of the invention.

The processing section (processor) 100 performs a game process, an image generation process, a sound generation process, and the like based on data input from the input section 160, a program, and the like. The game process includes starting the game when game start conditions have been satisfied, proceeding with the game, disposing an object (e.g., player object and enemy object), displaying an object, calculating a game result, finishing the game when game end conditions have been satisfied, and the like. The processing section 100 performs various processes using the storage section 170 as a work area. The function of the processing section 100 may be implemented by hardware such as a processor (e.g., CPU or DSP) or an ASIC (e.g., gate array), or a program.

The processing section 100 according to one embodiment of the invention includes an object space setting section 110, the acquisition section 111, an area setting section 112, an input direction determination section 113, a movement processing section 114, a game calculation section 115, a display control section 116, a drawing section 120, and a sound processing section 130. Note that the processing section 100 may have a configuration in which some of these sections are omitted.

The object space setting section 110 disposes (sets) an object (i.e., an object formed by a primitive surface (e.g., sprite, billboard, polygon, free-form surface, or subdivision surface)) that represents a display object (e.g., object (player object, moving object, or enemy object), moving path, building, tree, pillar, wall, or map (topography)) in an object space. Specifically, the object space setting section 110 determines the position and the rotation angle (synonymous with orientation or direction) of an object (model object), and disposes the object at the determined position ((X, Y) or (X, Y, Z)) and the determined rotation angle ((rotational angles around the X and Y axes or rotational angles around the X, Y, and Z axes)).

The term "object space" used herein refers to a virtual two-dimensional space or a virtual three-dimensional space. The term "two-dimensional space" used herein refers to a space in which an object is disposed at two-dimensional coordinates (X, Y), and the term "three-dimensional space" used herein refers to a space in which an object is disposed at three-dimensional coordinates (X, Y, Z), for example.

When the object space is a two-dimensional space, the object space setting section 110 disposes a plurality of objects in order of priority. For example, the object space setting section 110 may dispose a plurality of objects (sprites) in order from the innermost object so that the objects overlap.

If an image is generated so that an object having a large drawing size is disposed on the lower side of the image, and an object having a small drawing size is disposed on the upper side of the image, an object space that corresponds to the upper side of the screen is displayed on the inner side, and an object space that corresponds to the lower side of the screen is displayed on the near side.

When the object space is a three-dimensional space, an object is disposed in a world coordinate system to generate an image that is viewed from a given viewpoint and has a depth. In this case, a virtual camera control section controls a virtual camera (viewpoint) for generating an image viewed from a given (arbitrary) viewpoint within the object space. Specifically, the virtual camera control section controls the position (X, Y, Z) or the rotation angle (rotation angles around the X, Y, and Z axes) of the virtual camera (i.e., controls the viewpoint position or the line-of-sight direction).

For example, when photographing an object (e.g., character, ball, or car) from behind using the virtual camera, the virtual camera control section controls the position or the rotation angle (direction) of the virtual camera so that the virtual camera follows a change in position or rotation of the object. In this case, the virtual camera control section may control the virtual camera based on information (e.g., position, rotation angle, or speed) about the object obtained by the movement processing section 114. Alternatively, the virtual camera control section may rotate the virtual camera by a predetermined rotation angle, or may move the virtual camera along a predetermined moving path. In this case, the virtual camera control section controls the virtual camera based on virtual camera data that specifies the position (moving path) or the rotation angle of the virtual camera. When a plurality of virtual cameras (viewpoints) are provided, the virtual camera control section performs the above control process on each virtual camera.

The acquisition section 111 recognizes input information that has been input by the player using the input section 160. More specifically, the acquisition section 111 acquires an indicated position that has been input using the input section 160.

For example, the acquisition section 111 acquires a touch position (i.e., the two-dimensional coordinates of the touch position) within the touch detection area (touch panel) that is used to detect a touch operation performed by the player as the indicated position. Specifically, the acquisition section 111 acquires a touch position detected within a touch operation period (slide operation period) that corresponds to a period in which the player touches the touch panel, moves the finger on the touch panel, and then removes the finger from the touch panel.

The input information may be two-dimensional position coordinates indicated using a mouse or the like. In this case, the acquisition section 111 may acquire position coordinates indicated using a mouse within a period in which the player presses the button of the mouse, moves (drags) the mouse without releasing the button, and then releases the button.

The acquisition section 111 acquires an indicated position in a given cycle. The given cycle may be 1/60th of a second, 1/30th of a second, or 1/10th of a second, for example. Specifically, the acquisition section 111 acquires an indicated position every 1/30th of a second when the given cycle is 1/30th of a second. The acquisition section 111 may acquire an indicated position in a cycle that is identical with the drawing frame rate.

The area setting section 112 sets the direction determination areas within the touch detection area. For example, the area setting section 112 sets the direction determination areas that respectively correspond to a plurality of directions. Specifically, the area setting section 112 sets a direction determination area C1 that corresponds to the upward direction, a direction determination area C2 that corresponds to the rightward direction, a direction determination area C3 that corresponds to the downward direction, and a direction determination area C4 that corresponds to the leftward direction, within a determination area A.

The area setting section 112 sets the direction determination areas based on the previous (preceding) indicated position. The area setting section 112 causes the direction determination areas that respectively correspond to a plurality of directions to follow a change in the indicated position. The expression "causes the direction determination areas that respectively correspond to a plurality of directions to follow a change in the indicated position" used herein means that a reference position for setting the direction determination areas that respectively correspond to a plurality of directions is caused to follow a change in the indicated position. In other words, a reference position (division reference position) for dividing the determination area provided within the touch panel is caused to follow a change in the indicated position.

For example, when the player performs a slide operation (i.e., the player touches the touch panel, and moves the finger without removing the finger from the touch panel), the area setting section 112 sets the direction determination areas so that the direction determination areas follow a change in the touch position. Specifically, the area setting section 112 sets the direction determination areas in real time so that the direction determination areas follow a touch operation path that occurs due to contact between the finger (touch pen) or the like and the touch panel during a period in which the finger (touch pen) or the like comes in contact with the touch detection area (touch panel) and is then removed from the touch panel. When it has been detected that the player has pressed the button of a mouse, and moved (dragged) the mouse (indicated position), the area setting section 112 causes the direction determination areas to follow a change in the indicated position indicated using the mouse.

Specifically, the area setting section 112 sets the direction determination areas that respectively correspond to a plurality of directions at an input direction determination timing N (in a given cycle) (N≥2, N is an integer) based on the indicated position acquired at a timing N-1 (in a given cycle). This means that the area setting section 112 sets the current direction determination areas based on the indicated position acquired at the preceding timing. The area setting section 112 may set the direction determination areas that respectively correspond to a plurality of directions around the indicated position acquired at the preceding timing N-1, or may set the direction determination areas that respectively correspond to a plurality of directions around a position that is located at a given distance from the indicated position acquired at the preceding timing N-1.

The input direction determination section 113 determines the input direction based on the direction determination area to which the indicated position belongs. For example, the input direction determination section 113 determines a direction determination area among the direction determination areas C1 to C4 to which the indicated position acquired at the current timing (Nth timing in a given cycle) belongs, the direction determination areas C1 to C4 being set based on the indicated position acquired at the preceding timing ((N-1)th timing in a given cycle).

The movement processing section 114 calculates the movement of the object (e.g., character object or moving object). Specifically, the movement processing section 114 moves the moving object in the object space, or controls the motion (animation) of the moving object, based on input data that has been input by the player using the input section 160, a program (movement algorithm), data (motion data), and the like.

More specifically, the movement processing section 114 performs a simulation process that sequentially calculates movement information (moving direction, moving amount, moving speed, position, rotation angle, or acceleration) and motion information (position or rotation angle of each part object) about the object every frame (e.g., 1/60th of a second). The term "frame" used herein refers to a time unit used for a process that moves the object, a process that causes the object to make a motion (simulation process), or an image generation process. The frame rate may be constant, or may be changed depending on the processing load.

The movement processing section 114 moves the object based on the input direction determined by the input direction determination section 113. Specifically, the movement processing section 114 moves the object in a moving direction that corresponds to the input direction determined by the input direction determination section 113. For example, the movement processing section 114 moves the object in the rightward direction (positive x-axis direction) on the screen when the input direction is the rightward direction. The movement processing section 114 moves the object in the downward direction (negative y-axis direction) on the screen when the input direction is the downward direction, moves the object in the leftward direction (negative x-axis direction) on the screen when the input direction is the leftward direction, and moves the object in the upward direction (positive y-axis direction) on the screen when the input direction is the upward direction.

Note that the movement processing section 114 may move the object in a three-dimensional object space based on the input direction. For example, a moving direction is linked to each input direction in advance, and the object is moved in the moving direction that corresponds to the input direction.

The game calculation section 115 performs a game calculation process. For example, the game calculation section 115 performs a hit check process on the player object (first object) and the enemy object (second object) in the object space. For example, a hit check range may be set to the player object and the enemy object in advance, and the hit check process may be performed based on whether or not the hit check range set to the player object intersects the hit check range set to the enemy object.

When the object space is a two-dimensional space, the hit check process may be performed by determining whether or not a sprite that corresponds to the player object has hit a sprite that corresponds to the enemy object. When the object space is a three-dimensional space, the hit check process may be performed by determining whether or not a polygon or a bounding volume has hit another polygon or bounding volume.

The game calculation section 115 may determine the game result based on the hit check result. For example, the game calculation section 115 determines that the player has lost the game when the player object has hit the enemy object.

The display control section 116 displays a game image that includes the player object, the enemy object, and the like, or displays an input direction image that indicates the input direction. For example, the display control section 116 displays the input direction image that indicates the input direction so that the input direction image follows a change in the indicated position.

The drawing section 120 performs a drawing process that generates an image based on the results of various processes (game process) performed by the processing section 100, and outputs the generated image to the display section (display) 190. The drawing section 120 may generate a two-dimensional image, or may generate a three-dimensional image.

When the drawing section 120 generates a two-dimensional image, the drawing section 120 draws a plurality of objects in ascending order of priority. When an object with higher priority overlaps an object with lower priority, the drawing section 120 draws the object with higher priority over the object with lower priority.

When the drawing section 120 generates a three-dimensional game image, the drawing section 120 receives object data (model data) including vertex data (e.g., vertex position coordinates, texture coordinates, color data, normal vector, or alpha-value) of each vertex of the object (model), and performs a vertex process based on the vertex data included in the object data. Note that the drawing section 120 may optionally perform a vertex generation process (tessellation, curved surface division, or polygon division) for subdividing the polygon when performing the vertex process.

In the vertex process, the drawing section 120 performs a vertex movement process and a geometric process such as coordinate transformation (world coordinate transformation or camera coordinate transformation), clipping, perspective transformation, or light source process, and changes (updates or adjusts) the vertex data of the vertices that form the object based on the processing results. The drawing section 120 performs a rasterization process (scan conversion) based on the vertex data changed by the vertex process, so that the surface of the polygon (primitive) is linked to pixels. The drawing section 120 then performs a pixel process (fragment process) that draws the pixels that form the image (fragments that form the display screen).

In the pixel process, the drawing section 120 determines the final drawing color of each pixel by performing various processes such as a texture reading (texture mapping) process, a color data setting/change process, a translucent blending process, and an anti-aliasing process, and outputs (draws) the drawing color of the object subjected to perspective transformation to the image buffer 172 (frame buffer; a buffer that can store image information in pixel units; VRAM or rendering target). Specifically, the pixel process includes a per-pixel process that sets or changes the image information (e.g., color, normal, luminance, and alpha-value) in pixel units.

An image viewed from the virtual camera (given viewpoint) set in the object space is thus generated. When a plurality of virtual cameras (viewpoints) are provided, the drawing section 120 may generate an image so that images (segmented images) viewed from the respective virtual cameras are displayed on one screen.

The vertex process and the pixel process performed by the drawing section 120 may be implemented by hardware that enables a programmable polygon (primitive) drawing process (i.e., programmable shader (vertex shader or pixel shader)) based on a shader program written in shading language. The programmable shader enables a programmable per-vertex process and per-pixel process to increase the degree of freedom of the drawing process, so that the representation capability is significantly improved as compared with a fixed drawing process using hardware.

The drawing section 120 performs a geometric process, a texture mapping process, a hidden surface removal process, an alpha-blending process, and the like when drawing the object.

In the geometric process, the drawing section 120 subjects the object to coordinate transformation, clipping, perspective projection transformation, light source calculation, and the like. The drawing section 120 stores the object data (e.g. vertex position coordinates, texture coordinates, color data (luminance data), normal vector, or alpha-value) obtained by the geometric process (perspective transformation) in the storage section 170.

The texture mapping process includes mapping a texture (texel value) stored in a texture storage section included in the storage section 170 onto the object. Specifically, the drawing section 120 reads a texture (surface properties (e.g., color (RGB) and alpha-value)) from the texture storage section included in the storage section 170 using the texture coordinates set (assigned) to the vertices of the object, and the like, and maps the texture (two-dimensional image) onto the object. In this case, the drawing section 120 performs a pixel-texel link process, a bilinear interpolation process (texel interpolation process), and the like.

Note that the drawing section 140 may map a given texture when drawing the object. In this case, the color distribution (texel pattern) of the texture mapped onto the object can be dynamically changed.

Note that textures that differ in color distribution (pixel pattern) may be dynamically generated, or textures that differ in color distribution may be provided in advance, and the texture mapped onto the object may be dynamically changed. The color distribution of the texture may be changed in object units.

The drawing section 120 performs the hidden surface removal process by a Z-buffer method (depth comparison method or Z-test) using a Z-buffer (depth buffer) that stores the Z-value (depth information) of the drawing target pixel. Specifically, the drawing section 120 refers to the Z-value stored in the Z-buffer when drawing the drawing target pixel corresponding to the primitive of the object, and compares the Z-value stored in the Z-buffer with the Z-value of the drawing target pixel of the primitive. When the Z-value of the drawing target pixel is a small Z-value with respect to the virtual camera, for example, the drawing section 120 draws the drawing target pixel, and updates the Z-value stored in the Z-buffer with a new Z-value.

When performing the alpha-blending process, the drawing section 120 performs a translucent blending process (e.g., normal alpha-blending, additive alpha-blending, or subtractive alpha-blending) based on the alpha-value (A-value). Note that the alpha-value is information that can be linked to each pixel (texel or dot), such as additional information other than the color information. The alpha-value may be used as mask information, translucency (equivalent to transparency or opacity), bump information, or the like.

The drawing section 120 may generate an image that is displayed in a display area that corresponds to the touch detection area. The image that is displayed in the display area may be an image that includes the object, for example.

The sound generation section 130 performs a sound generation process that generates game sound (e.g., background music (BGM), effect sound, or voice) based on the results of various processes performed by the processing section 100, and outputs the generated game sound to the sound output section 192.

The terminal according to one embodiment of the invention may be a system dedicated to a single-player mode that allows only one player to play the game, or may be a system that also implements a multi-player mode that allows a plurality of players to play the game.

When a plurality of players play the game, the game image and the game sound supplied to the players may be generated using one terminal, or may be generated by a distributed process using a plurality of terminals connected via a network (transmission line or communication line), for example.

### 2. Process

### 2-1. Outline

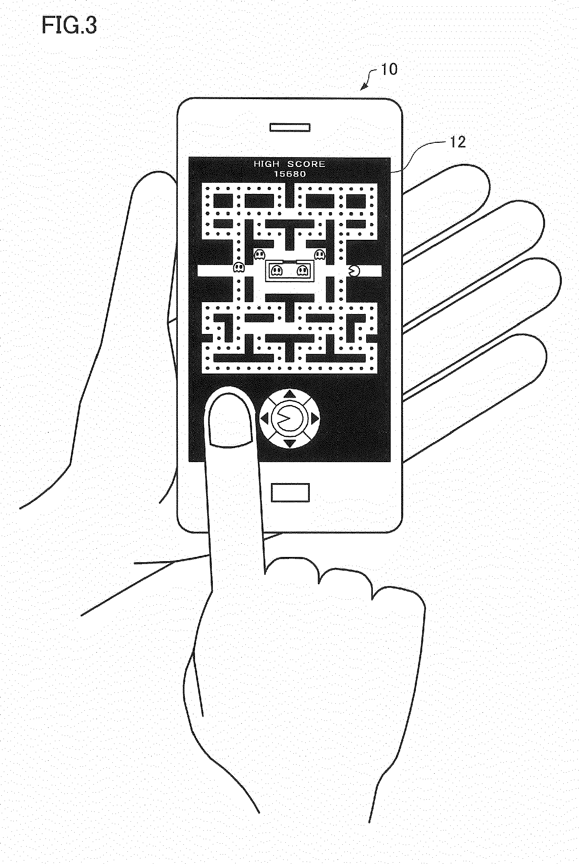

A game process according to one embodiment of the invention moves an object present in an object space (game space) using the terminal 10. For example, the terminal 10 may be the mobile phone (smartphone) illustrated in FIGS. 2A and 2B. As illustrated in FIG. 3, the player may perform a slide operation by moving his finger while touching the display (touch panel display) 12 that includes the touch detection area that also serves as the display area.

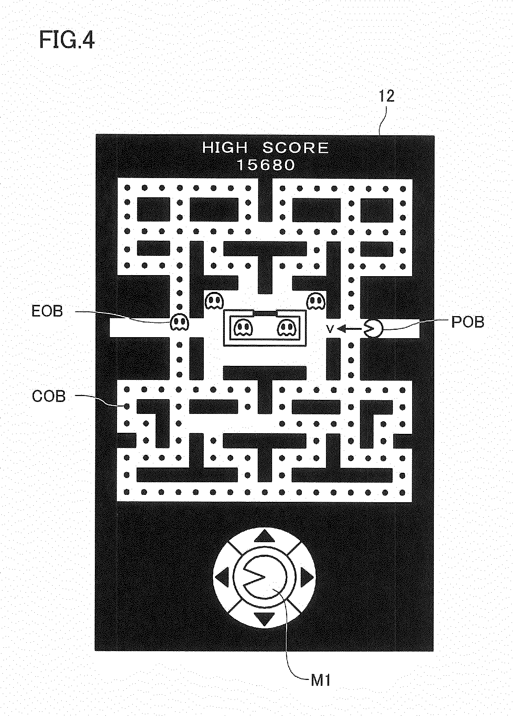

As illustrated in FIG. 4, a player object POB and an enemy object EOB move along a moving path at a given speed, for example.

A food object COB disposed within the moving path is deleted when the player object POB has passed the food object COB. It is determined that the player has cleared the game when all of the food objects COB have been deleted (i.e., when the player object POB has passed all of the food objects COB). The game ends when the player object POB has hit the enemy object EOB. Specifically, the player performs an input operation that instructs the moving direction of the player object POB so that the player object POB does not encounter the enemy object EOB, and all of the food objects COB are deleted. The game process according to one embodiment of the invention includes an input determination process that allows the player to intuitively issue a direction instruction. The input determination process according to one embodiment of the invention is described in detail below.

### 2-2. Direction determination area setting process

In one embodiment of the invention, a touch position that has been detected within the touch detection area (touch panel) is acquired as an indicated position, and a direction determination area used to determine the input direction is set based on the acquired indicated position.

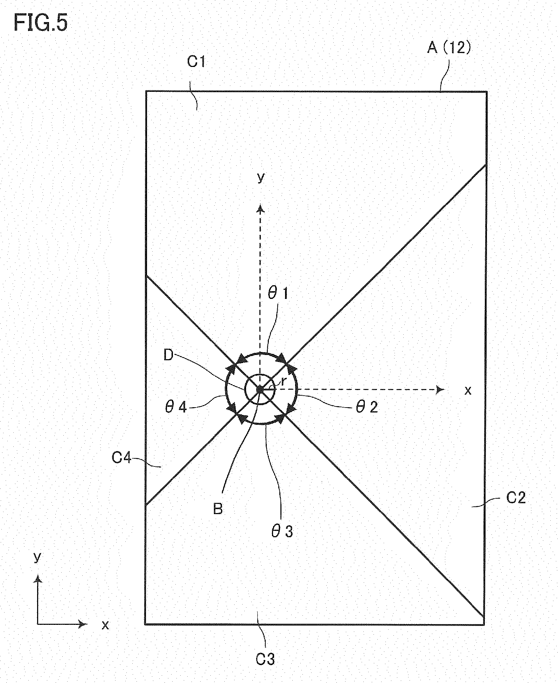

As illustrated in FIG. 5, a determination area A is present within the touch detection area 12 (touch panel display), for example. In one embodiment of the invention, the determination area A corresponds to the entire touch detection area. Note that the determination area A may be set corresponding to part of the touch detection area. The determination area A may have a polygonal shape (e.g., quadrangle, triangle, or hexagon), a circular shape, or an irregular shape.

As illustrated in FIG. 5, a plurality of direction determination areas C1 to C4 are set based on a reference position B. For example, the determination area A is divided into a plurality of areas based on the reference position (reference point) B, and the plurality of areas are set to be the direction determination areas C1 to C4. Specifically, the determination area A is divided at an angle of 90° around the reference position B to set the direction determination areas C1 to C4. As illustrated in FIG. 5, the determination area A is divided into four areas so that the direction determination area C1 is set in a range theta1 of 45° to 135° relative to the x-axis, the direction determination area C2 is set in a range theta2 of -45° to 45° relative to the x-axis, the direction determination area C3 is set in a range theta3 of 225° to 315° relative to the x-axis, and the direction determination area C4 is set in a range theta4 of 135° to 225° relative to the x-axis, for example.

Note that a circular area that is formed around the reference position B and has a radius r is set as an allowance area D in order to prevent a determination error.

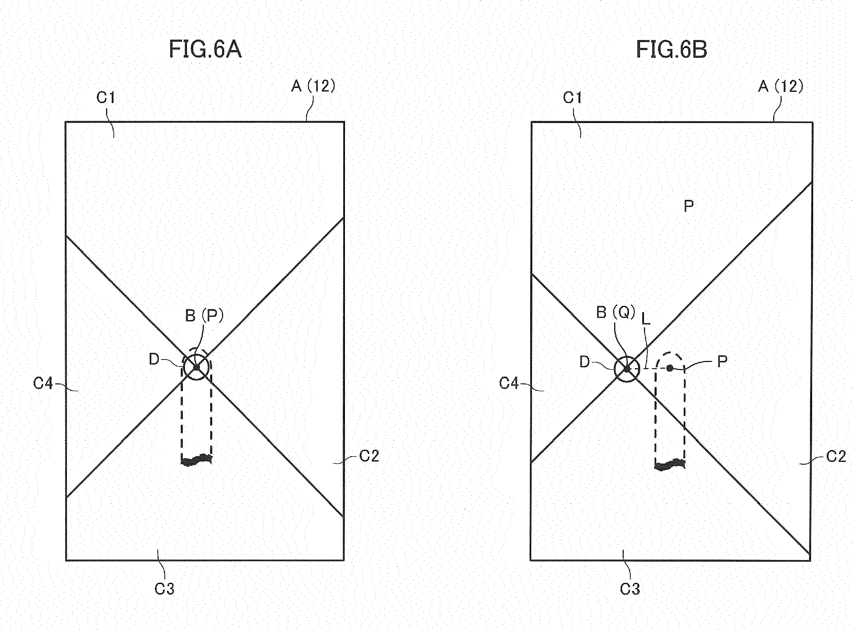

The reference position B is determined based on a touch position that has been detected within the touch detection area. For example, a touch position P that has been detected within the touch detection area may be set to be the reference position B (see FIG. 6A), or a position Q that is located at a given distance L from the touch position P may be set to be the reference position B (see FIG. 6B). The given distance L is set so that the position Q is located close to the touch position P. For example, the given distance L is set to be greater to some extent than the average width of a human finger. The given distance L may be (almost) identical with the radius r of the allowance area D. Note that the given distance may be adjusted depending on the resolution of the display screen of the terminal, for example.

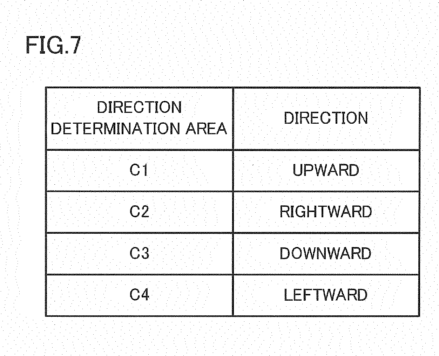

The four direction determination areas C1 to C4 are set in order to determine four directions (upward, rightward, downward, and leftward directions). As illustrated in FIG. 7, the direction determination areas C1 to C4 are respectively linked to the upward direction (i.e., the positive y-axis direction on the screen), the rightward direction (i.e., the positive x-axis direction on the screen), the downward direction (i.e., the negative y-axis direction on the screen), and the leftward direction (i.e., the negative x-axis direction on the screen), for example. Specifically, the number of direction determination areas is determined depending on the number of directions that should be determined, and the direction determination areas are set corresponding to the respective directions.

### 2-3. Input direction determination process

In one embodiment of the invention, a plurality of direction determination areas are set based on the previous (preceding) touch position, a direction determination area among the plurality of direction determination areas to which the touch position belongs is determined, and the direction corresponding to the direction determination area to which the touch position belongs is determined to be the input direction input by the player.

### 2-3-1. First example of input direction determination process

An input direction determination process that determines the input direction without changing a plurality of direction determination areas that have been set based on an initially detected touch position is described below as a first example. The term "initially detected touch position" used herein refers to a touch position that has been detected in a state in which a touch position has not been detected within the touch detection area.

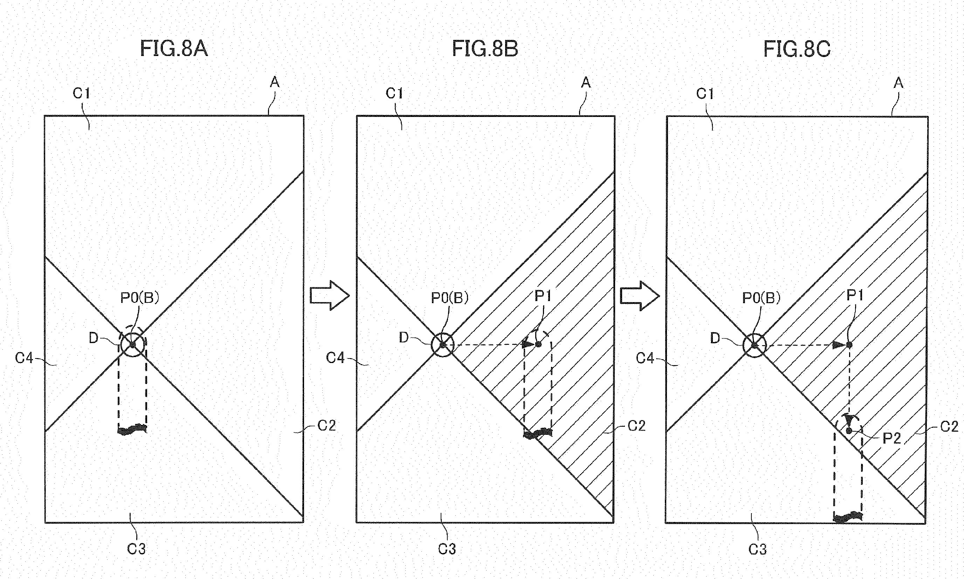

As illustrated in FIG. 8A, a touch position P0 is detected when the player has touched the touch panel, for example. The touch position P0 is determined to be the reference position B, and the direction determination areas C1 to C4 are set within the determination area A around the reference position B.

The input direction is determined as described below when the player has performed a slide operation. When the timing at which the touch position P0 has been detected is referred to as a first timing, the input direction is determined based on a touch position P1 detected at the second timing (e.g., when 1/60th of a second has elapsed from the first timing when the cycle is 1/60th of a second). Specifically, the input direction is determined by determining a direction determination area among the direction determination areas C1 to C4 to which the detected touch position P1 belongs (see FIG. 8B). For example, when the detected touch position P1 belongs to the direction determination area C2, the rightward direction that corresponds to the direction determination area C2 is determined to be the input direction.

Note that the input direction is not determined when the touch position belongs to the allowance area D. This also applies to the following second and third examples. A situation in which the input direction is determined despite the player's intention is prevented by providing the allowance area D.

The following problem occurs when employing the first example in which the direction determination areas are not changed. For example, when a touch position P2 has been detected at the third timing (e.g., when 1/60th of a second has elapsed from the second timing when the cycle is 1/60th of a second) (see FIG. 8C), the rightward direction is determined to be the input direction since the touch position P2 belongs to the direction determination area C2. However, since the direction from the touch position P1 to the touch position P2 is a downward direction, it is appropriate to determine the downward direction to be the input direction. Specifically, the input direction determination accuracy deteriorates when the direction determination areas C1 to C4 are not changed (are fixed). This makes it difficult for the player to perform an intuitive direction input operation.

### 2-3-2. Second example of input direction determination process

An input direction determination process that determines the input direction while causing the direction determination areas C1 to C4 to follow a change in the indicated position is described below as a second example. The second example can solve the problem that occurs when employing the first example, and improve the input direction determination accuracy. This makes it possible for the player to perform an intuitive direction input operation.

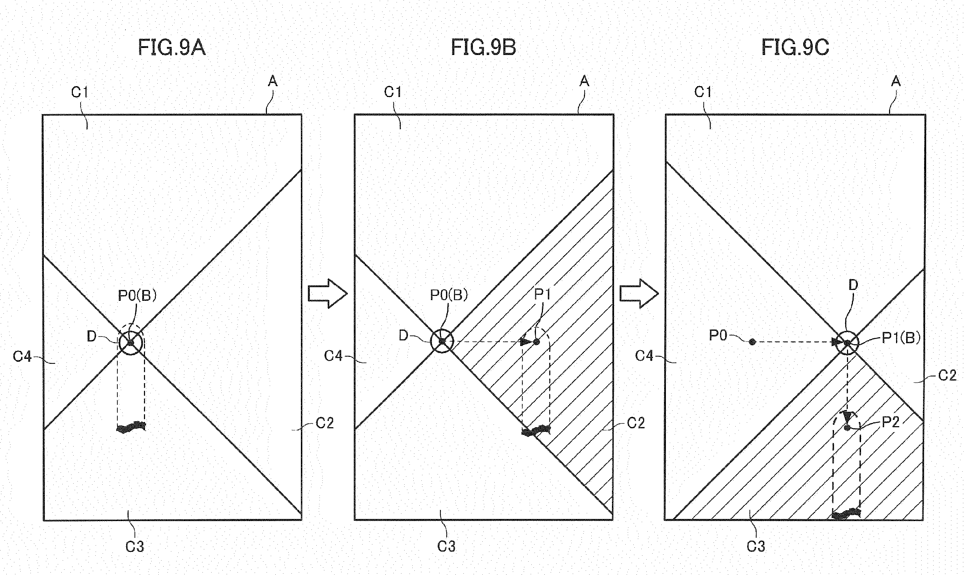

As illustrated in FIG. 9A, a touch position P0 is detected when the player has touched the touch panel, for example. The touch position P0 is determined to be the reference position B, and the direction determination areas C1 to C4 are set within the determination area A around the reference position B.

When the timing at which the touch position P0 has been detected is referred to as a first timing, the input direction is determined based on a touch position P1 detected at the second timing in a given cycle. Specifically, since the touch position P1 belongs to the direction determination area C2 (see FIG. 9B), the rightward direction that corresponds to the direction determination area C2 is determined to be the input direction.

As illustrated in FIG. 9C, when a touch position P2 has been detected at the third timing in a given cycle, the direction determination areas C1 to C4 are set around the touch position P1 (reference position B) detected at the second timing. The input direction is determined based on the touch position P2 detected at the third timing. Specifically, since the touch position P2 belongs to the direction determination area C3 (see FIG. 9C), the downward direction that corresponds to the direction determination area C3 is determined to be the input direction.

When the player has subsequently performed a slide operation, and a touch position has been detected, the direction determination areas C1 to C4 are set around the touch position detected at the preceding timing ((N-1)th timing), and the input direction is determined by determining a direction determination area among the direction determination areas C1 to C4 to which the touch position detected at the current timing (Nth timing) belongs.

According to the second example, since the reference position B, around which the direction determination areas are set, follows a change in the touch position, the direction determination areas follow a change in the touch position (indicated position in a broad sense). Therefore, the input direction input by the player can be instantaneously and correctly determined. This makes it possible for the player to perform an intuitive direction input operation.

### 2-3-3. Third example of input direction determination process

Another input direction determination process that determines the input direction while causing the direction determination areas C1 to C4 to follow a change in the indicated position is described below as a third example. In the third example, the reference position B is set at a position located at a given distance L from the touch position P. The third example can also solve the problem that occurs when employing the first example, and improve the input direction determination accuracy. This makes it possible for the player to perform an intuitive direction input operation.

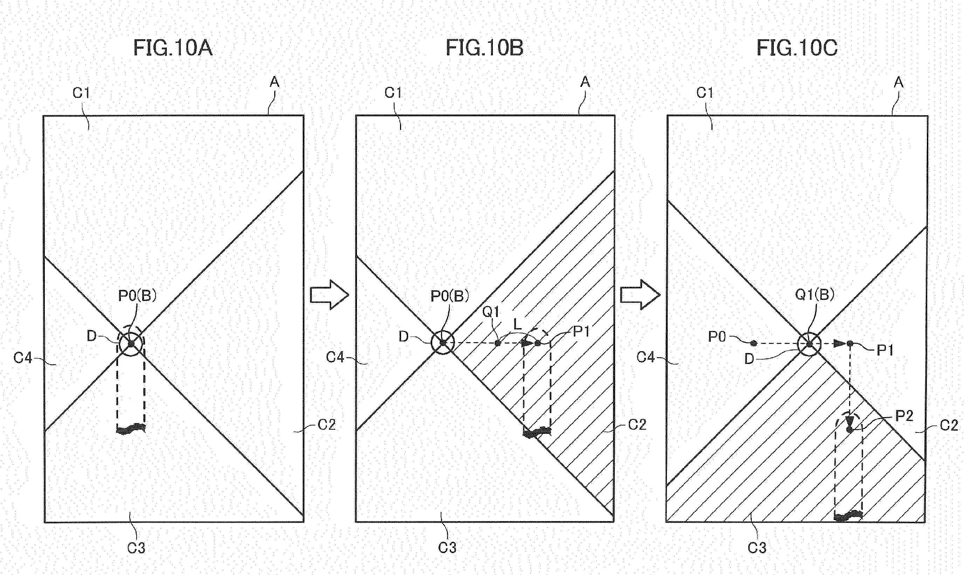

As illustrated in FIG. 10A, a touch position P0 is detected when the player has touched the touch panel, for example. The touch position P0 is determined to be the reference position B, and the direction determination areas C1 to C4 are set within the determination area A around the reference position B.

When the timing at which the touch position P0 has been detected is referred to as a first timing, the input direction is determined based on a touch position P1 detected at the second timing in a given cycle. Specifically, since the touch position P1 belongs to the direction determination area C2 (see FIG. 10B), the rightward direction that corresponds to the direction determination area C2 is determined to be the input direction.

As illustrated in FIG. 10C, when a touch position P23 has been detected at the third timing in a given cycle, a position Q1 located at a given distance L from the touch position P1 detected at the second timing is determined to be the reference position B, and the direction determination areas C1 to C4 are set around the reference position B.

Specifically, the position Q1 that is located on a line (straight line) that connects the touch position P1 detected at the second timing and the reference position B at the first timing and is located at the given distance L from the touch position P1 (see FIG. 10B) is set to be the reference position B at the third timing (i.e., the reference position B is updated) (see FIG. 10C). The direction determination areas C1 to C4 are then set around the position Q1.

Since the touch position P2 detected at the third timing belongs to the direction determination area C3 (see FIG. 10C), the downward direction that corresponds to the direction determination area C3 is determined to be the input direction.

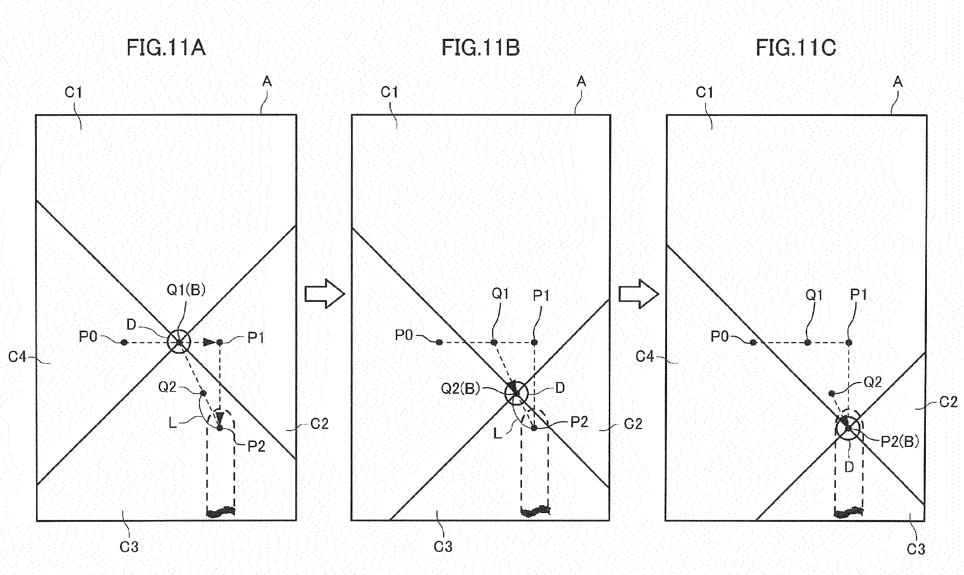

As illustrated in FIG. 11A, a position Q2 that is located on a straight line that connects the position Q1 (i.e., the reference position B at the second timing) and the touch position P2 detected at the third timing and is located at the given distance L from the touch position P2 is set to be the reference position B at the third timing. Specifically, the direction determination areas C1 to C4 are set around the position Q2 (reference position B) at the third timing (see FIG. 11B).

When the player has subsequently performed a touch operation, and a touch position has been detected, the direction determination areas C1 to C4 are set around a position located at the given distance L from the touch position detected at the preceding timing ((N-1)th timing), and the input direction is determined by determining a direction determination area among the direction determination areas C1 to C4 to which the touch position detected at the current timing (Nth timing) belongs.

According to the third example, since the direction determination areas C1 to C4 follow a change in the position that is located at the given distance L from the touch position (i.e., the direction determination areas C1 to C4 follow a change in the touch position), the input direction input by the player can be instantaneously and correctly determined. This makes it possible for the player to perform an intuitive direction input operation.

When the touch position on the touch panel has not changed when a given period T1 (e.g., 1 second) has elapsed, the reference position B detected at the Nth timing may be smoothly moved to the touch position P2 detected at the (N-1)th timing (see FIG. 11C) over a given period T2 (e.g., 1 second) after the given period T1 has elapsed. This makes it possible to more correctly determine the input direction when the touch position has changed after the given period T2 has elapsed.

The size (area) and/or the shape of the direction determination areas C1 to C4 may be changed when causing the direction determination areas C1 to C4 to follow a change in the touch position. In the second and third examples, the determination area A is set over the entire area of the touch panel. Note that the determination area A may be set within a partial area of the touch panel. In this case, at least one of the size and the shape of the determination area A may be changed. The determination area A may be moved to follow a change in the touch position.

### 2-4. Display control

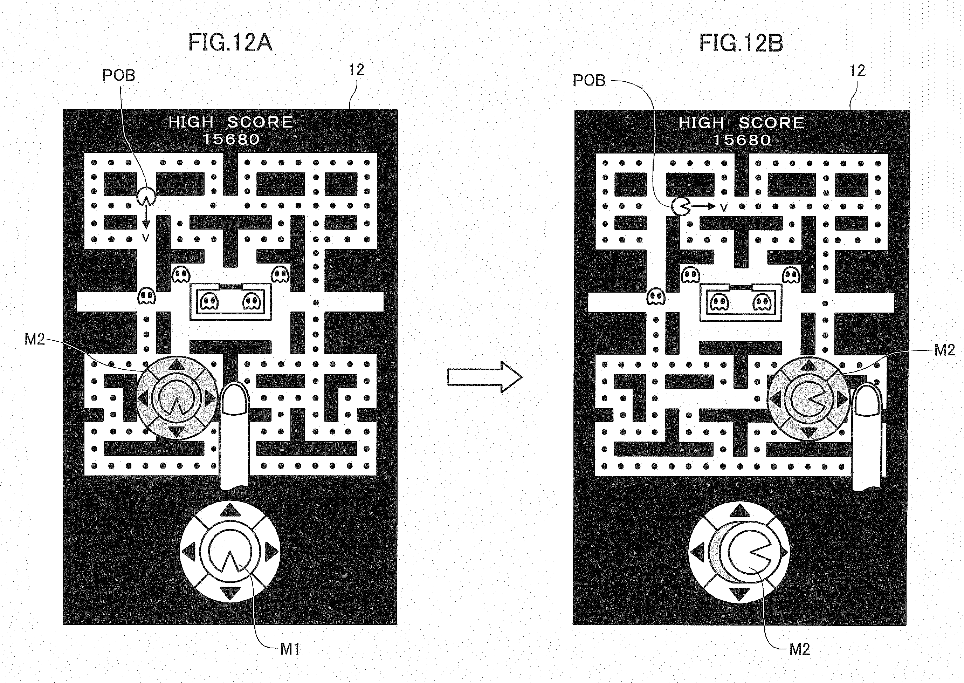

In one embodiment of the invention, input direction images (virtual pad images) M1 and M2 that indicate the input direction may be displayed. For example, when the player has touched the touch panel (see FIG. 12A), and has performed a slide operation in the rightward direction (see FIG. 12B) (i.e., the input direction has been determined to be the rightward direction), the input direction image M1 is displayed so that the player character turns to the right, and moves in the rightward direction from a given position.

The input direction image M2 may be displayed to follow a change in the touch position. Specifically, when the player has performed a slide operation in the rightward direction, the input direction image M2 may be displayed so that the player character turns to the right, and the input direction image M2 moves in the rightward direction. This makes it possible for the player to determine the input direction without observing the input direction image M1 (i.e., without changing the eye direction to a large extent) by observing the input direction image M2 that is displayed near the touch position. Note that the input direction image M2 may be displayed (disposed) at the same position as the touch position, or may be displayed (disposed) at a position shifted from the touch position to some extent (e.g., a position located at the given distance L from the touch position, or the reference position).

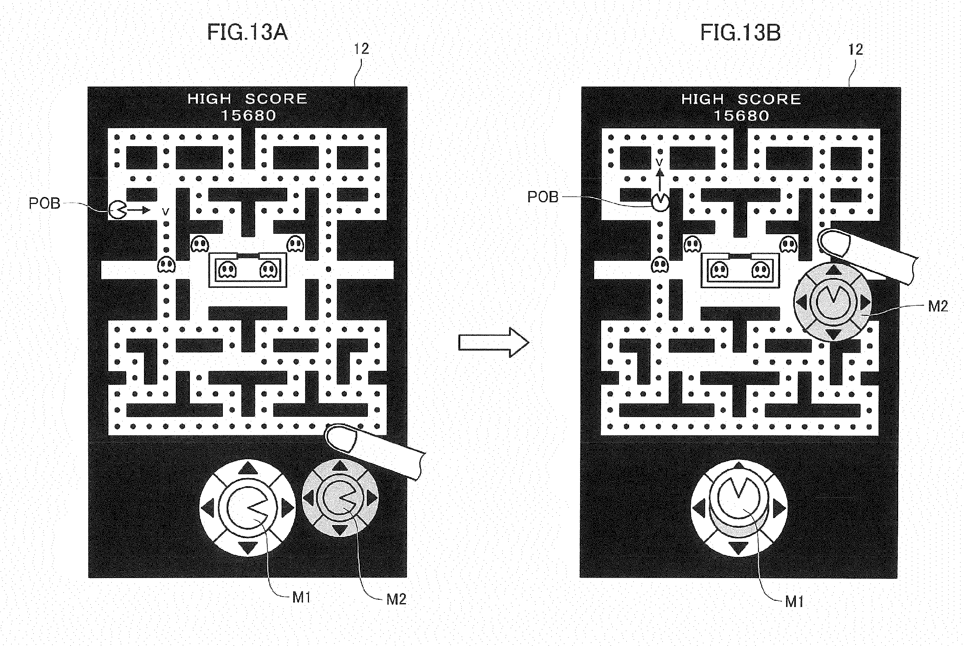

When the player has performed a slide operation in the upward direction (see FIGS. 13A and 13B) (i.e., the input direction has been determined to be the upward direction), the input direction image M2 is displayed so that the player character turns up, and moves in the upward direction from a given position. The input direction image M2 may be displayed to follow a change in the touch position. Specifically, when the player has performed a slide operation in the upward direction, the input direction image M2 may be displayed so that the input direction image M2 moves in the upward direction.

When the touch position on the touch panel has not changed when the given period T1 has elapsed (refer to the third example), the input direction image M1 may be displayed so that the player character returns to the original position (given position) when moving the reference position over the given period T2. This makes it possible for the player to observe a state in which the reference position returns to the touch position.

### 2-5. Movement process

In one embodiment of the invention, the object is moved in the object space based on the determined input direction. Specifically, the player can instruct the moving direction of the player object POB by performing a slide operation within the touch operation area.

For example, when the player object POB moves in the downward direction (see FIG. 12A), and the player has performed a slide operation in the rightward direction (i.e., the input direction has been determined to be the rightward direction), the moving direction of the player object POB is changed to the rightward direction (see FIG. 12B).

When the player object POB moves in the rightward direction (see FIG. 13A), and the player has performed a slide operation in the upward direction (i.e., the input direction has been determined to be the upward direction), the moving direction of the player object POB is changed to the upward direction (see FIG. 13B).

In one embodiment of the invention, the player object POB is always moved unless the player object POB collides with an obstacle. Specifically, the player object POB is always moved unless the player object POB collides with an obstacle even when the input direction is not detected (e.g., when the touch position is present within the allowance area D, or when the touch position is not detected). In this case, the player object POB is continuously moved in the moving direction determined based on the input direction that has been determined immediately before the current timing.

### 2-6. Flowchart

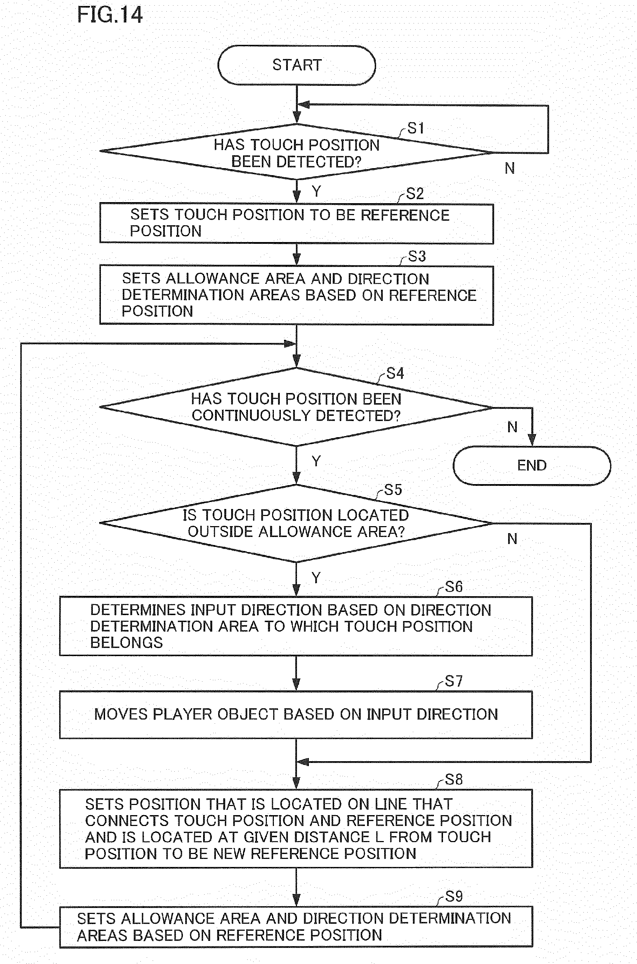

The flow of the input determination process according to one embodiment of the invention is described below with reference to FIG. 14. In a step S1, whether or not a touch position has been detected is determined. For example, whether or not a touch position has been detected within the determination area A in a given cycle (e.g., every 1/60th of a second) is determined.

When a touch position has been detected (Y in step S1), the touch position is set to be the reference position (step S2), and the allowance area and the direction determination areas are set based on the reference position (step S3). For example, the allowance area and the direction determination areas are set within the determination area A based on the reference position.

In a step S4, whether or not a touch position has been continuously detected is determined. Specifically, whether or not a touch position has been detected in a given cycle (e.g., every 1/60th of a second) is determined. When a touch position has been continuously detected (Y in step S4), a transition to a step S5 occurs. The process ends when a touch position has not been continuously detected (N in step S4).

In the step S5, whether or not the touch position is located outside the allowance area is determined. When the touch position is located outside the allowance area (Y in step S5), a transition to a step S6 occurs. When the touch position is located within the allowance area (N in step S5), a transition to a step S8 occurs.

In the step S6, the input direction is determined based on the direction determination area to which the touch position belongs. For example, when the touch position belongs to the direction determination area C1 (see FIG. 7), the input direction is determined to be the upward direction since the direction determination area C1 corresponds to the upward direction.

In a step S7, the player object is moved based on the input direction. For example, when the input direction is the upward direction, the moving direction of the player object is determined to be the upward direction. The player object is then moved in the determined direction (upward direction).

In a step S8, a position that is located on a line that connects the touch position and the reference position and is located at the given distance L from the touch position is set to be a new reference position. For example, the position Q1 (see FIG. 10B) that is located on a line (straight line) that connects the touch position P1 and the reference position B (position P0) at the Nth timing and is located at the given distance L from the touch position P1 is set to be the reference position B at the (N+1)th timing.

The allowance area and the direction determination areas are set based on the reference position set in the step S8 (step S9). For example, the allowance area D and the direction determination areas C1 to C4 are set around the reference position B set at the position Q1 (see FIG. 10C). A transition to the step S4 occurs after completion of the step S9. The process ends when a touch position has not been continuously detected (N in step S4). For example, the process ends when the player has removed his finger from the touch panel.

### 3. Application example

### 3-1. Different types of direction control

In one embodiment of the invention, a plurality of determination areas may be set so that the player can perform a direction input operation corresponding to each determination area. This makes it possible to implement different types of direction control at the same time.

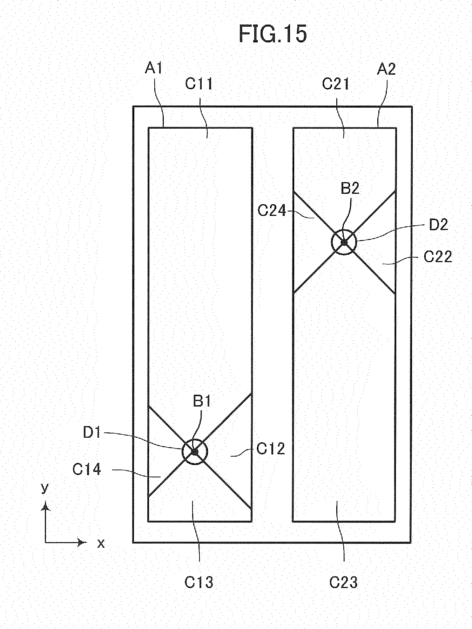

As illustrated in FIG. 15, a reference position B1 is set within a determination area A1, and an allowance area D1 and direction determination areas C11 to C14 that respectively correspond to four directions (upward, rightward, downward, and leftward directions) are set based on the reference position B1. A first input direction is determined based on a direction determination area among the direction determination areas C11 to C14 set within the determination area A1 to which a first touch position belongs.

A reference position B2 is set within a determination area A2, and an allowance area D2 and direction determination areas C21 to C24 that respectively correspond to four directions (upward, rightward, downward, and leftward directions) are set based on the reference position B2. A second input direction is determined based on a direction determination area among the direction determination areas C21 to C24 set within the determination area A2 to which a second touch position belongs.

When implementing a shooting game, for example, the first input direction is determined within the determination area A1, and the moving direction of the player character is controlled based on the first input direction. The second input direction is determined within the determination area A2, and the bullet launching direction is controlled based on the second input direction. This makes it possible to implement different types of direction control at the same time.

Note that the determination areas A1 and A2 are set so that the determination areas A1 and A2 do not overlap within the touch detection area. If the determination areas A1 and A2 overlap, it may be difficult to correctly determine the first input direction and the second input direction. Note that the number of determination areas is not limited to one or two, but may be three or more.

### 3-2. Direction determination area setting example when performing movement control process and stop control process

The embodiments of the invention may be applied to a game process that implements an action game or the like. For example, the embodiments of the invention may be applied to a stop control process that stops the player object in addition to the movement control process that moves the player object.

For example, when a touch position has been continuously detected within the touch detection area, the input direction is determined based on the direction determination area to which the touch position belongs, and the player object is moved based on the input direction. When a touch position has not been detected within the touch detection area, the player object is stopped. The player object is also stopped when a touch position has been detected within the allowance area D.

When performing the movement control process and the stop control process on the player object, it is desirable to determine a position that is located at the given distance L from the touch position to be the reference position, and set the direction determination areas around the reference position (refer to the third example). This makes it unnecessary for the player to perform a continuous slide operation (i.e., the operation can be simplified).

The above advantage is described in detail below based on a comparison between a case where the reference position is set at the touch position and a case where the reference position is set at a position that differs from the touch position.

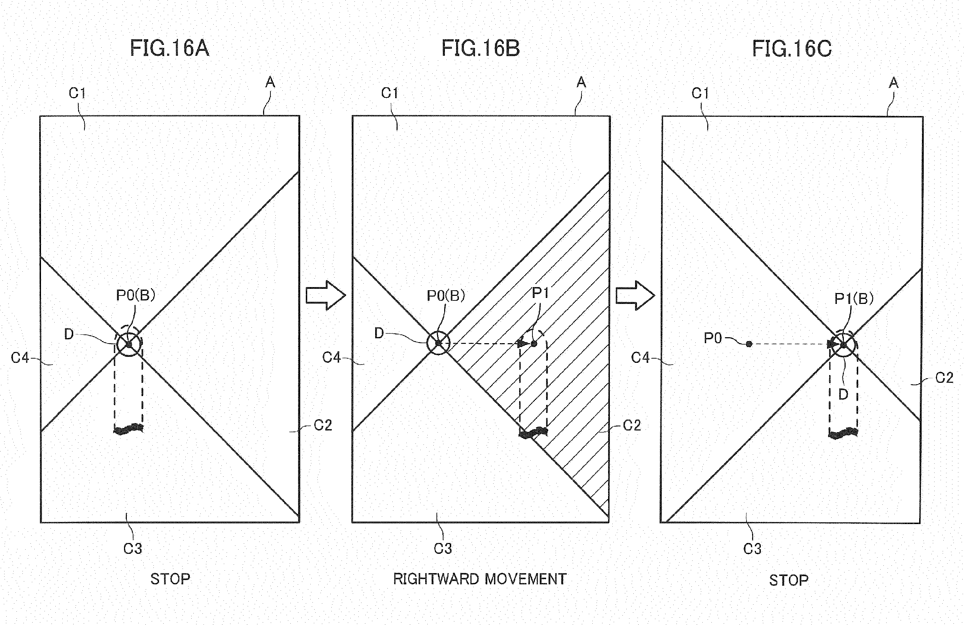

An example in which the reference position is set at the touch position is described below with reference to FIGS. 16A to 16C. As illustrated in FIG. 16A, a touch position P0 is detected when the player has touched the touch panel, and a reference position B is set at the touch position P0.

The timing at which the touch position P0 has been detected is referred to as a first timing. As illustrated in FIG. 16B, a touch position P1 is detected at the second timing in a given cycle due to a slide operation performed by the player, and the input direction is determined based on the touch position P1. Specifically, since the touch position P1 belongs to the direction determination area C2, the input direction is determined to be the rightward direction, and the player object is moved in the rightward direction.

As illustrated in FIG. 16C, the touch position P2 detected at the second timing is determined to be the reference position B at the third timing, and the direction determination areas C1 to C4 are set around the reference position B. The player object is stopped when the touch position acquired at the third timing is identical with the position P1 (see FIG. 16C).

Specifically, when the touch position P1 has been detected at the third timing, the touch position P1 belongs to the allowance area D. Therefore, the input direction is not determined, and the player object is stopped. If the player desires to move the player object in the rightward direction after the third timing, the player must continue a slide operation in the rightward direction. This is inconvenient to the player since the operational environment deteriorates (i.e., the player must continue a slide operation).

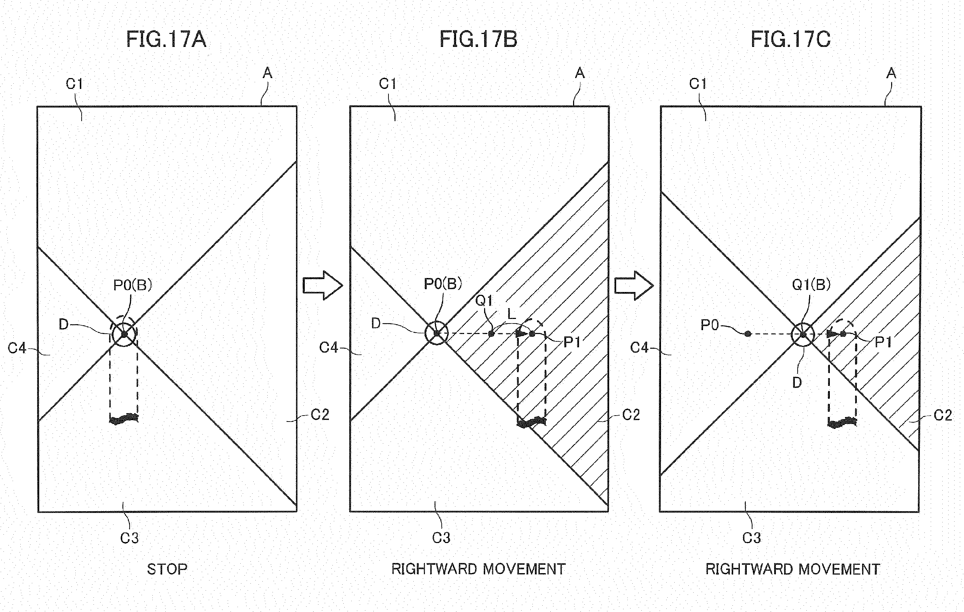

An example in which the reference position is set at a position that differs from the touch position is described below with reference to FIGS. 17A to 17C. As illustrated in FIG. 17A, a touch position P0 is detected when the player has touched the touch panel, and a reference position B is set at the touch position P0.

The timing at which the touch position P0 has been detected is referred to as a first timing. As illustrated in FIG. 17B, a touch position P1 is detected at the second timing due to a slide operation performed by the player, and the input direction is determined based on the touch position P1. Specifically, the input direction is determined to be the rightward direction at the second timing, and the player object is moved in the rightward direction.

As illustrated in FIG. 17C, a position Q1 that is located at a given distance L from the touch position P1 detected at the second timing is determined to be the reference position B at the third timing, and the direction determination areas C1 to C4 are set around the reference position B. According to this configuration, even if the touch position detected at the third timing is identical with the position PI, the input direction is determined to be the rightward direction since the touch position P1 belongs to the direction determination area C2, and the player object is moved in the rightward direction. Note that the reference position B at the Nth timing is set at a position that is located at the given distance L from the indicated position detected at the (N-1)th timing toward the reference position B set at the (N-1)th timing. This makes it easy for the player to continuously issue a rightward direction instruction (see FIG. 17C).

Specifically, the player touches the touch panel at a position around the position P1 when the player desires to continuously move the player object in the rightward direction (see FIG. 17C). On the other hand, the player removes his finger from the touch panel when the player desires to stop the player object. Therefore, the player can easily issue a moving direction instruction and a stop instruction. It is possible to provide an operational environment convenient to the player by setting the reference position B at a position located at the given distance L from the touch position (see FIGS. 17A to 17C).

In the third example, when the touch position has not changed when the given period T1 has elapsed, the reference position at the Nth timing is moved to the touch position detected at the (N-1)th timing over the given period T2 (see FIGS. 11B and 11C). When stopping the player object in a state in which the touch position is present within the allowance area D, the reference position at the Nth timing is not moved to the touch position detected at the (N-1)th timing even if the touch position has not changed when the given period T1 has elapsed. Specifically, if the reference position at the Nth timing is set at the touch position detected at the (N-1)th timing, the operational environment deteriorates since the player object is stopped.

### 3-3. Input section

The embodiments of the invention may be applied to another input device that detects an indicated position instead of a touch panel that allows the player to input a position via a touch operation. In this case, the direction determination areas may be caused to follow a change in the indicated position detected by the input device.

For example, when inputting an indicated position using a mouse, the indicated position may be detected by detecting a signal generated when the player has pressed the button of the mouse, and the input direction may be determined based on the detection result. The direction determination areas may be caused to follow a change in the indicated position, and the input direction may then be determined.

### 3-4. Number of determination areas

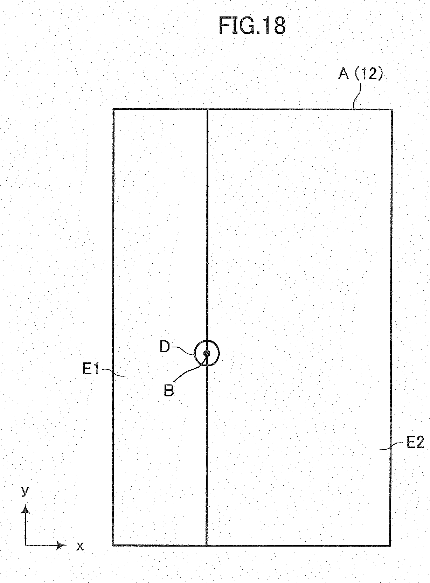

An example in which four direction determination areas are set corresponding to four determination target directions has been described above. Note that only two direction determination areas may be set based on the reference position B when it suffices to determine whether the input direction is either the leftward direction or the rightward direction. As illustrated in FIG. 18, a left direction determination area E1 that corresponds to the leftward direction, and a right direction determination area E2 that corresponds to the rightward direction are set based on the reference position B, for example. The direction determination areas E1 and E2 are set based on the previous (preceding) indicated position (i.e., the direction determination areas E1 and E2 are caused to follow a change in the indicated position). Note that the number of determination target directions is not limited to two or four, but may be three or five or more. The direction determination areas are set in the same number as the number of determination target directions.

### 3-5. Other

The embodiments of the invention may be applied to various games (e.g., action game, role-playing game, battle game, racing game, music game, fighting game, shooting game, and flight shooting game).

The invention is not limited to the above embodiments. Various modifications and variations may be made. Any term cited with a different term having a broader meaning or the same meaning at least once in the specification and the drawings may be replaced by the different term in any place in the specification and the drawings.

The invention includes various other configurations substantially the same as the configurations described in connection with the above embodiments (e.g., a configuration having the same function, method, and results, or a configuration having the same objective and effects). The invention also includes a configuration in which an unsubstantial section (part) described in connection with the above embodiments is replaced by another section (part). The invention also includes a configuration having the same effects as those of the configurations described in connection with the above embodiments, or a configuration capable of achieving the same objective as that of the configurations described in connection with the above embodiments. The invention also includes a configuration in which a known technique is added to the configurations described in connection with the above embodiments.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention, as defined by the appended claims.

## Claims

1. A terminal (10) that determines an input direction based on a continuously detected touch position, the terminal (10) comprising:
an acquisition section (111) that acquires an indicated touch position that has been input using an input section (160);
a detection section (162) that detects coordinates of a touch position within a touch detection area, the detection section (162) being part of the input section (160);
an area setting section (112) that determines a reference position based on a previously indicated touch position, and sets a plurality of direction determination areas (C1, C2, C3, C4) based on the reference position, the plurality of direction determining areas respectively corresponding to a plurality of directions; and
an input direction determination section (113) that determines the input direction within a period in which the indicated touch position is input using the input section (160), based on a direction determination area among the plurality of direction determination areas (C1, C2, C3, C4) to which the indicated touch position belongs,
the area setting section (112) causing the reference position to follow a change in the indicated touch position,
**characterised in that**
the acquisition section (111) acquires the indicated touch position that has been input using the input section (160) in a given cycle when the indicated touch position has been continuously detected,
the area setting section (112) sets the plurality of direction determination areas that respectively correspond to the plurality of directions based on the reference position acquired at an (N-1)th timing in the given cycle, and
the input direction determining section (113) determines the input direction based on a direction determination area among the plurality of direction determination areas to which the indicated touch position acquired at an Nth timing in the given cycle belongs.

2. The terminal (10) as defined in claim 1,
wherein the area setting section (112) sets the plurality of direction determination areas that respectively correspond to the plurality of directions based on the reference position acquired at the (N-1)th timing.

3. The terminal (10) as defined in claim 1,
wherein the area setting section (112) sets the plurality of direction determination areas that respectively correspond to the plurality of directions around the reference position acquired at the (N-1)th timing.

4. The terminal (10) as defined claim 1,
wherein the area setting section (112) sets the plurality of direction determination areas that respectively correspond to the plurality of directions around a reference position at the Nth timing that is located on a straight line that connects the reference position at the (N-1th) timing and the indicated touch position detected at the (N-1)th timing and is located at a given distance from the indicated touch position.

5. The terminal (10) as defined in claim 1,
wherein the area setting section (112) sets the plurality of direction determination areas that respectively correspond to the plurality of directions around a position that is located at a given distance from the previously indicated touch position.

6. The terminal (10) as defined in any one of claims 1 to 5, further comprising:
a display control section (116) that displays an input direction image that indicates the input direction so that the input direction image follows a change in the indicated touch position.

7. The terminal (10) as defined in any one of claims 1 to 6, further comprising:
a movement processing section (114) that moves an object in an object space based on the input direction that has been determined by the input direction determination section (113).

8. An input determination method that is implemented by a terminal (10) that determines an input direction based on a continuously detected touch position, the input determination method comprising:
an acquisition step that acquires an indicated touch position that has been input using an input section (160);
a detection step that detects coordinates of a touch position within a touch detection area;
an area setting step that determines a reference position based on a previously indicated touch position, and sets a plurality of direction determination areas (C1, C2, C3, C4) based on the reference position, the plurality of direction determination areas respectively corresponding to a plurality of directions; and
an input direction determination step that determines the input direction within a period in which the indicated touch position is input using the input section (160), based on a direction determination area among the plurality of direction determination areas (C1, C2, C3, C4) to which the indicated touch position belongs,
the area setting step causing the reference position to follow a change in the indicated touch position,
**characterised in that**
the acquisition step acquires the indicated touch position that has been input using the input section (160) in a given cycle when the indicated touch position has been continuously detected,
the area setting step sets the plurality of direction determination areas that respectively correspond to the plurality of directions based on the reference position acquired at an (N-1)th timing in the given cycle, and
the input direction determination step determines the input direction based on a direction determination area among the plurality of direction determination areas to which the indicated touch position acquired at an Nth timing in the given cycle belongs.

9. The input determination method as defined in claim 8,
wherein the area setting step sets the plurality of direction determination areas that respectively correspond to the plurality of directions around a reference position at the Nth timing that is located on a straight line that connects the reference position at the (N-1)th timing and the indicated touch position acquired at the (N-1)th timing and is located at a given distance from the indicated touch position.

10. The input determination method as defined in claim 8,
wherein the area setting step sets the plurality of direction determination areas that respectively correspond to the plurality of directions around a position that is located at a given distance from the previously indicated touch position.

11. The input determination method as defined in any one of claims 8 to 10, further comprising:
a display control step that displays an input direction image that indicates the input direction so that the input direction image follows a change in the indicated touch position.

12. The input determination method as defined in any one of claims 8 to 11, further comprising:
a movement processing step that moves an object in an object space based on the input direction that has been determined by the input direction determination step.

13. A computer program product that implements a process that determines an input direction based on a continuously detected touch position, the program product causing a computer to function as:
an acquisition section (111) that acquires an indicated touch position that has been input using an input section (160);
a detection section (162) that detects coordinates of a touch position within a touch detection area, the detection section (162) being part of the input section (160) ;
an area setting section (112) that determines a reference position based on a previously indicated touch position, and sets a plurality of direction determination areas (C1, C2, C3, C4) based on the reference position, the plurality of direction determination areas respectively corresponding to a plurality of directions; and
an input direction determination section (113) that determines the input direction within a period in which the indicated touch position is input using the input section (160), based on a direction determination area among the plurality of direction determination areas (C1, C2, C3, C4) to which the indicated touch position belongs,
the area setting section (112) causing the reference position to follow a change in the indicated touch position,
**characterised in that** the acquisition section (111) acquires the indicated touch position that has been input using the input section (160) in a given cycle when the indicated touch position has been continuously detected,
the area setting section (112) sets the plurality of direction determination areas that respectively correspond to the plurality of directions based on the reference position acquired at an (N-1)th timing in the given cycle, and
the input direction determining section (113) determines the input direction based on a direction determination area among the plurality of direction determination areas to which the indicated touch position acquired at an Nth timing in the given cycle belongs.

## Patentansprüche

1. Endgerät (10), das eine Eingaberichtung anhand einer kontinuierlich erfassten Berührungsstelle bestimmt, wobei das Endgerät (10) umfasst:
einen Erfassungsbereich (111), der eine im Erfassungsbereich (160) angezeigte Berührungsstelle erfasst;
einen Erkennungsbereich (162), der die Koordinaten einer Berührungsstelle innerhalb eines Berührungserkennungsbereichs erfasst, wobei der Erkennungsbereich (162) Teil des Eingabebereichs (160) ist;
einen Bereichseinstellbereich (112), der eine Bezugsposition anhand einer zuvor angegebenen Berührungsstelle bestimmt und eine Vielzahl von Richtungsbestimmungsbereichen (C1, C2, C3, C4) anhand der Bezugsposition einstellt, wobei die Vielzahl von Richtungsbestimmungsbereichen einer Vielzahl von Richtungen entsprechen; und
einen Eingaberichtungsbestimmungsbereich (113), der die Eingaberichtung unter der Vielzahl von Richtungsbestimmungsbereichen (C1, C2, C3, C4) anhand des zu der angegebenen Berührungsstelle gehörenden Richtungsbestimmungsbereichs bestimmt, während die angegebene Berührungsstelle im Eingabebereich (160) eingegeben wird.
der Bereichseinstellbereich (112) bewirkt, dass die Referenzposition einer Änderung der angezeigten Berührungsstelle folgt
und folgendermaßen gekennzeichnet ist:
der Erfassungsbereich (111) erfasst die angegebene Berührungsstelle, die im Erfassungsbereich (160) in einem bestimmten, die angezeigte Berührungsstelle kontinuierlich erfassenden Zyklus eingegeben wurde,
der Bereichseinstellbereich (112) stellt die Vielzahl der der Vielzahl von Richtungen entsprechenden Richtungsbestimmungsbereiche anhand der Bezugsposition ein, die im Zyklus zum (N-1)-ten Zeitpunkt erfasst wurden und
der Eingaberichtungsbestimmungsbereich (113) bestimmt unter der Vielzahl von Richtungsbestimmungsbereichen die Eingaberichtung anhand dem zur angezeigten Berührungsstelle gehörenden Richtungsbestimmungsbereich, der zum N-ten Zeitpunkt im Zyklus erfasst wird.

2. Endgerät (10) gemäß Anspruch 1,
wobei der Bereichseinstellbereich (112) die Vielzahl der der Vielzahl von Richtungen entsprechenden Richtungsbestimmungsbereiche anhand der Bezugsposition einstellt, die zum (N-1)-ten Zeitpunkt erfasst wurde.

3. Endgerät (10) gemäß Anspruch 1,
wobei der Bereichseinstellbereich (112) die Vielzahl der der Vielzahl von Richtungen entsprechenden Richtungsbestimmungsbereiche um die Bezugsposition herum einstellt, die zum (N-1)-ten Zeitpunkt erfasst wurden.

4. Endgerät (10) gemäß Anspruch 1,
wobei der Bereichseinstellbereich (112) die Vielzahl der der Vielzahl von Richtungen entsprechenden Richtungsbestimmungsbereiche um die Bezugsposition herum einstellt, die zum N-ten Zeitpunkt erfasst wurden und sich auf einer geraden Linie befinden, welche die zum (N-1)-ten Zeitpunkt erfasste Bezugsposition und die zum (N-1)-ten Zeitpunkt erfasste und sich in einem vorgegebenen Abstand zur angezeigten Berührungsstelle befindenden Berührungsstelle verbindet.

5. Endgerät (10) gemäß Anspruch 1,
wobei der Bereichseinstellbereich (112) die Vielzahl der der Vielzahl von Richtungen entsprechenden Richtungsbestimmungsbereiche um eine Position herum einstellt, die sich in einem vorgegebenen Abstand von der zuvor angegebenen Berührungsstelle befindet.

6. Endgerät (10) gemäß einem der Ansprüche 1 bis 5, ferner umfassend: einen Anzeigesteuerabschnitt (116), der ein die Eingaberichtung angebendes Eingaberichtungsbild anzeigt, damit das Eingaberichtungsbild einer Änderung der angezeigten Berührungsstelle folgt.

7. Endgerät (10) gemäß einem der Ansprüche 1 bis 6, ferner umfassend:
einen Bewegungsverarbeitungsabschnitt (114), der ein Objekt in einem Objektraum anhand der Eingaberichtung bewegt, die durch den Eingaberichtungsbestimmungsbereich (113) bestimmt wurde.

8. Ein von einem Endgerät (10) implementiertes Eingabebestimmungsverfahren, das eine Eingaberichtung anhand einer kontinuierlich erfassten Berührungsstelle bestimmt, wobei das Eingabebestimmungsverfahren umfasst:
einen Erfassungsschritt, der eine angezeigte Berührungsstelle erfasst, die im Erfassungsbereich (160) eingegeben wurde;
einen Erkennungsschritt, der die Koordinaten einer Berührungsstelle innerhalb eines Berührungserkennungsbereichs erfasst;
einen Bereichseinstellschritt, der eine Bezugsposition anhand einer zuvor angegebenen Berührungsstelle bestimmt und eine Vielzahl von Richtungsbestimmungsbereichen (C1, C2, C3, C4) anhand der Bezugsposition einstellt, wobei die Vielzahl von Richtungsbestimmungsbereichen einer Vielzahl von Richtungen entsprechen; und
einen Eingaberichtungsbestimmungsschritt, der die Eingaberichtung unter der Vielzahl von Richtungsbestimmungsbereichen (C1, C2, C3, C4) anhand des zu der angegebenen Berührungsstelle gehörenden Richtungsbestimmungsbereichs bestimmt, während die angegebene Berührungsstelle im Eingabebereich (160) eingegeben wird.
der Bereichseinstellschritt bewirkt, dass die Referenzposition einer Änderung der angezeigten Berührungsstelle folgt und folgendermaßen gekennzeichnet ist:
der Erfassungsschritt erfasst die angegebene Berührungsstelle, die im Erfassungsbereich (160) in einem bestimmten, die angezeigte Berührungsstelle kontinuierlich erfassenden Zyklus eingegeben wurde,
der Bereichseinstellschritt stellt die Vielzahl der der Vielzahl von Richtungen entsprechenden Richtungsbestimmungsbereiche anhand der Bezugsposition ein, die im Zyklus zum (N-1)-ten Zeitpunkt erfasst wurden und
der Eingaberichtungsbestimmungsschritt bestimmt unter der Vielzahl von Richtungsbestimmungsbereichen die Eingaberichtung anhand dem zur angezeigten Berührungsstelle gehörenden Richtungsbestimmungsbereich, der zum N-ten Zeitpunkt im Zyklus erfasst wird.

9. Eingabebestimmungsverfahren gemäß Anspruch 8,
wobei der Bereichseinstellschritt die Vielzahl der der Vielzahl von Richtungen entsprechenden Richtungsbestimmungsbereiche um die Bezugsposition herum einstellt, die zum N-ten Zeitpunkt erfasst wurden und sich auf einer geraden Linie befinden, welche die zum (N-1)-ten Zeitpunkt erfasste Bezugsposition und die zum (N-1)-ten Zeitpunkt erfasste und sich in einem vorgegebenen Abstand zur angezeigten Berührungsstelle befindenden Berührungsstelle verbindet.

10. Eingabebestimmungsverfahren gemäß Anspruch 8,
wobei der Bereichseinstellschritt die Vielzahl der der Vielzahl von Richtungen entsprechenden Richtungsbestimmungsbereiche um eine Position herum einstellt, die sich in einem vorgegebenen Abstand von der zuvor angegebenen Berührungsstelle befindet.

11. Eingabebestimmungsverfahren gemäß einem der Ansprüche 8 bis 10, ferner umfassend:
einen Anzeigesteuerschritt, der ein die Eingaberichtung angebendes Eingaberichtungsbild anzeigt, damit das Eingaberichtungsbild einer Änderung der angezeigten Berührungsstelle folgt.

12. Eingabebestimmungsverfahren gemäß einem der Ansprüche 8 bis 11, ferner umfassend:
einen Bewegungsverarbeitungsschritt, der ein Objekt in einem Objektraum anhand der Eingaberichtung bewegt, die durch den Eingaberichtungsbestimmungsschritt bestimmt wurde.

13. Computerprogrammprodukt, das einen Prozess implementiert, der eine Eingaberichtung anhand einer kontinuierlich erfassten Berührungsstelle bestimmt, wobei das Programmprodukt bewirkt, dass ein Computer folgendermaßen funktioniert:
einen Erfassungsbereich (111), der eine im Erfassungsbereich (160) angezeigte Berührungsstelle erfasst;
einen Erkennungsbereich (162), der die Koordinaten einer Berührungsstelle innerhalb eines Berührungserkennungsbereichs erfasst, wobei der Erkennungsbereich (162) Teil des Eingabebereichs (160) ist;
einen Bereichseinstellbereich (112), der eine Bezugsposition anhand einer zuvor angegebenen Berührungsstelle bestimmt und eine Vielzahl von Richtungsbestimmungsbereichen (C1, C2, C3, C4) anhand der Bezugsposition einstellt, wobei die Vielzahl von Richtungsbestimmungsbereichen einer Vielzahl von Richtungen entsprechen; und
einen Eingaberichtungsbestimmungsbereich (113), der die Eingaberichtung unter der Vielzahl von Richtungsbestimmungsbereichen (C1, C2, C3, C4) anhand des zu der angegebenen Berührungsstelle gehörenden Richtungsbestimmungsbereichs bestimmt, während die angegebene Berührungsstelle im Eingabebereich (160) eingegeben wird.
der Bereichseinstellbereich (112) bewirkt, dass die Referenzposition einer Änderung der angezeigten Berührungsstelle folgt
**dadurch gekennzeichnet, dass** der Erfassungsbereich (111) die angegebene Berührungsstelle erfasst, die im Erfassungsbereich (160) in einem bestimmten, die angezeigte Berührungsstelle kontinuierlich erfassenden Zyklus eingegeben wurde,
der Bereichseinstellbereich (112) stellt die Vielzahl der der Vielzahl von Richtungen entsprechenden Richtungsbestimmungsbereiche anhand der Bezugsposition ein, die im Zyklus zum (N-1)-ten Zeitpunkt erfasst wurden und der Eingaberichtungsbestimmungsbereich (113) bestimmt unter der Vielzahl von Richtungsbestimmungsbereichen die Eingaberichtung anhand dem zur angezeigten Berührungsstelle gehörenden Richtungsbestimmungsbereich, der zum N-ten Zeitpunkt im Zyklus erfasst wird.

## Revendications

1. Un terminal (10) qui détermine une direction d'entrée sur la base d'une position tactile détectée en continu, le terminal (10) comprenant :
une section d'acquisition (111) qui acquiert une position tactile indiquée qui a été entrée en utilisant une section d'entrée (160) ;
une section de détection (162) qui détecte des coordonnées d'une position tactile dans une zone de détection tactile, la section de détection (162) faisant partie de la section d'entrée (160) ;
une section de réglage de zone (112) qui détermine une position de référence sur la base d'une position tactile précédemment indiquée, et définit une pluralité de zones de détermination de direction (C1, C2, C3, C4) sur la base de la position de référence, la pluralité de zones de détermination de direction correspondant respectivement à une pluralité de directions ; et
une section de détermination de direction d'entrée (113) qui détermine la direction d'entrée dans une période dans laquelle la position tactile indiquée est entrée en utilisant la section d'entrée (160), sur la base d'une zone de détermination de direction parmi la pluralité de zones de détermination de direction (C1, C2, C3, C4) auxquelles appartient la position tactile indiquée,
la section de réglage de zone (112) faisant en sorte que la position de référence suive un changement dans la position tactile indiquée,
**caractérisée en ce que** la section d'acquisition (111) acquiert la position tactile indiquée qui a été entrée en utilisant la section d'entrée (160) dans un cycle donné lorsque la position tactile indiquée a été détectée en continu,
la section de réglage de zone (112) définit la pluralité de zones de détermination de direction qui correspondent respectivement à la pluralité de directions sur la base de la position de référence acquise à une (N-1)^{ième} synchronisation dans le cycle donné, et
la section de détermination de direction d'entrée (113) détermine la direction d'entrée sur la base d'une zone de détermination de direction parmi la pluralité de zones de détermination de direction auxquelles appartient la position tactile indiquée acquise à une N^{ième} synchronisation dans le cycle donné.

2. Le terminal (10) selon la revendication 1, dans lequel la section de réglage de zone (112) définit la pluralité de zones de détermination de direction qui correspondent respectivement à la pluralité de directions sur la base de la position de référence acquise à la (N-1)^{ième} synchronisation.

3. Le terminal (10) selon la revendication 1, dans lequel la section de réglage de zone (112) définit la pluralité de zones de détermination de direction qui correspondent respectivement à la pluralité de directions autour de la position de référence acquise à la (N-1)^{ième} synchronisation.

4. Le terminal (10) selon la revendication 1, dans lequel la section de réglage de zone (112) définit la pluralité de zones de détermination de direction qui correspondent respectivement à la pluralité de directions autour d'une position de référence à la N^{ième} synchronisation qui est située sur une ligne droite qui relie la position de référence à la (N-1)^{ième} synchronisation et la position tactile indiquée détectée à la (N-1)^{ième} synchronisation et est située à une distance donnée de la position tactile indiquée.

5. Le terminal (10) selon la revendication 1, dans lequel la section de réglage de zone (112) définit la pluralité de zones de détermination de direction qui correspondent respectivement à la pluralité de directions autour d'une position qui est située à une distance donnée de la position tactile précédemment indiquée.

6. Le terminal (10) selon l'une quelconque des revendications 1 à 5, comprenant en outre :
une section de commande d'affichage (116) qui affiche une image de direction d'entrée qui indique la direction d'entrée de sorte que l'image de direction d'entrée suit un changement dans la position tactile indiquée.

7. Le terminal (10) selon l'une quelconque des revendications 1 à 6, comprenant en outre :
une section de traitement de mouvement (114) qui déplace un objet dans un espace objet sur la base de la direction d'entrée qui a été déterminée par la section de détermination de direction d'entrée (113).

8. Un procédé de détermination d'entrée qui est mis en oeuvre par un terminal (10) qui détermine une direction d'entrée sur la base d'une position tactile détectée en continu, le procédé de détermination d'entrée comprenant :
une étape d'acquisition qui acquiert une position tactile indiquée qui a été entrée en utilisant une section d'entrée (160) ;
une étape de détection qui détecte les coordonnées d'une position tactile dans une zone de détection tactile ;
une étape de réglage de zone qui détermine une position de référence sur la base d'une position tactile précédemment indiquée, et définit une pluralité de zones de détermination de direction (C1, C2, C3, C4) sur la base de la position de référence, la pluralité des zones de détermination de direction correspondant respectivement à une pluralité de directions ; et
une étape de détermination de direction d'entrée qui détermine la direction d'entrée dans une période dans laquelle la position tactile indiquée est entrée en utilisant la section d'entrée (160), sur la base d'une zone de détermination de direction parmi la pluralité de zones de détermination de direction (C1, C2, C3,
C4) auxquelles appartient la position tactile indiquée,
l'étape de réglage de zone faisant en sorte que la position de référence suive un changement de la position tactile indiquée,
**caractérisée en ce que** l'étape d'acquisition acquiert la position tactile indiquée qui a été entrée en utilisant la section d'entrée (160) dans un cycle donné lorsque la position tactile indiquée a été détectée en continu,
l'étape de réglage de zone définit la pluralité de zones de détermination de direction qui correspondent respectivement à la pluralité de directions sur la base de la position de référence acquise à une (N-1)^{ième} synchronisation dans le cycle donné, et
l'étape de détermination de direction d'entrée détermine la direction d'entrée sur la base d'une zone de détermination de direction parmi la pluralité de zones de détermination de direction auxquelles appartient la position tactile indiquée acquise à une N^{ième} synchronisation dans le cycle donné.

9. Le procédé de détermination d'entrée selon la revendication 8,
dans lequel l'étape de réglage de zone définit la pluralité de zones de détermination de direction qui correspondent respectivement à la pluralité de directions autour d'une position de référence à la N^{ième} synchronisation qui est située sur une ligne droite qui relie la position de référence à la (N-1)^{ième} synchronisation et la position tactile indiquée acquise à la (N-1)^{ième} synchronisation et est située à une distance donnée de la position tactile indiquée.

10. Le procédé de détermination d'entrée selon la revendication 8,
dans lequel l'étape de réglage de zone définit la pluralité de zones de détermination de direction qui correspondent respectivement à la pluralité de directions autour d'une position qui est située à une distance donnée de la position tactile précédemment indiquée.

11. Le procédé de détermination d'entrée selon l'une quelconque des revendications 8 à 10, comprenant en outre :
une étape de commande d'affichage qui affiche une image de direction d'entrée qui indique la direction d'entrée de sorte que l'image de direction d'entrée suit un changement dans la position tactile indiquée.

12. Le procédé de détermination d'entrée selon l'une quelconque des revendications 8 à 11, comprenant en outre :
une étape de traitement du mouvement qui déplace un objet dans un espace objet sur la base de la direction d'entrée qui a été déterminée par l'étape de détermination de la direction d'entrée.

13. Un produit de programme informatique qui met en oeuvre un processus qui détermine une direction d'entrée sur la base d'une position tactile détectée en continu, le produit de programme faisant fonctionner un ordinateur comme :
une section d'acquisition (111) qui acquiert une position tactile indiquée qui a été entrée en utilisant une section d'entrée (160) ;
une section de détection (162) qui détecte des coordonnées d'une position tactile dans une zone de détection tactile, la section de détection (162) faisant partie de la section d'entrée (160) ;
une section de réglage de zone (112) qui détermine une position de référence sur la base d'une position tactile précédemment indiquée, et définit une pluralité de zones de détermination de direction (C1, C2, C3, C4) sur la base de la position de référence, la pluralité de zones de détermination de direction correspondant respectivement à une pluralité de directions ; et
une section de détermination de direction d'entrée (113) qui détermine la direction d'entrée dans une période dans laquelle la position tactile indiquée est entrée en utilisant la section d'entrée (160), sur la base d'une zone de détermination de direction parmi la pluralité de zones de détermination de direction (C1, C2, C3, C4) auxquelles appartient la position tactile indiquée,
la section de réglage de zone (112) faisant en sorte que la position de référence suive un changement dans la position tactile indiquée,
**caractérisée en ce que** la section d'acquisition (111) acquiert la position tactile indiquée qui a été entrée en utilisant la section d'entrée (160) dans un cycle donné lorsque la position tactile indiquée a été détectée en continu,
la section de réglage de zone (112) définit la pluralité de zones de détermination de direction qui correspondent respectivement à la pluralité de directions sur la base de la position de référence acquise à une (N-1)^{ième} synchronisation dans le cycle donné, et
la section de détermination de direction d'entrée (113) détermine la direction d'entrée sur la base d'une zone de détermination de direction parmi la pluralité de zones de détermination de direction auxquelles appartient la position tactile indiquée acquise à une N^{ième} synchronisation dans le cycle donné.
